# EUROPEAN PATENT APPLICATION

(11) **EP 4 310 693 A1**
(43) Date of publication of application: **24.01.2024**
(21) Application number: 23182922.7
(22) Date of filing: 30.06.2023
(51) Int. Cl.: G06F 16/25

(54) **EVALUATING THE QUALITY OF INTEGRATIONS FOR EXECUTING SEARCHES USING APPLICATION PROGRAMMING INTERFACES**

(30) Priority: 08.07.2022 US 202217860718
(71) Applicant: Citrix Systems Inc., Fort Lauderdale, FL 33309 (US)
(72) Inventor: MARQUIÉ, Bruno, Fort Lauderdale, FL 33309 (US)
(74) Representative: Jensen, Anders Damgaard

(57) **Abstract**

In one disclosed embodiment, a computing system may receive a request to test accuracy of a search integration component for a system of record. The computing system may determine that a test corpus of files has been stored by the system of record. In response to the request, the computing system may send, to an API endpoint, an API call corresponding to a search query identified in a judgment list, the judgment list including data indicating a relevancy of files of the test corpus to the search query. The computing system may receive, from the search integration component, an API response to the API call, the API response identifying files stored by the system of record. The computing system may determine an accuracy score for the search integration component based on the judgement list and the files identified in the API response.

## Description

### BACKGROUND

Various systems have been developed that allow client devices to access applications and/or data files over a network. Certain products offered by Citrix Systems, Inc., of Fort Lauderdale, FL, including the Citrix Workspace^{™} family of products, provide such capabilities.

### SUMMARY

This Summary is provided to introduce a selection of concepts in a simplified form that are further described below in the Detailed Description. This Summary is not intended to identify key features or essential features, nor is it intended to limit the scope of the claims included herewith.

In some of the disclosed embodiments, a method comprises receiving, by a computing system, a request to test accuracy of a first search integration component for a first system of record, the first search integration component being configured to receive, at a first application programming interface (API) endpoint and from one or more devices, first incoming API calls representing search queries, to translate the first incoming API calls into first outgoing API calls to be sent to the first system of record, to send the first outgoing API calls to one or more second API endpoints of the first system of record, to receive, from the first system of record, first incoming API responses to the first outgoing API calls, to translate the first incoming API responses into first outgoing API responses representing search query results, and to send the first outgoing API responses to the one or more devices; determining, by the computing system, that a test corpus of files has been stored by the first system of record; in response to the request, sending, from the computing system to the first API endpoint, at least a first API call corresponding to at least a first search query identified in a judgment list, the judgment list further including first data indicating a relevancy of at least one file of the test corpus of files to the first search query; receiving, by the computing system and from the first search integration component, a first API response to the first API call, the first API response identifying one or more files stored by the first system of record; and determining, by the computing system, a first accuracy score for the first search integration component based at least in part the first data and the one or more files identified in the first API response.

In some embodiments, a computing system comprises at least one processor and at least one computer-readable medium encoded with instructions which, when executed by the at least one processor, cause the computing system to receive a request to test accuracy of a first search integration component for a first system of record, the first search integration component being configured to receive, at a first application programming interface (API) endpoint and from one or more devices, first incoming API calls representing search queries, to translate the first incoming API calls into first outgoing API calls to be sent to the first system of record, to send the first outgoing API calls to one or more second API endpoints of the first system of record, to receive, from the first system of record, first incoming API responses to the outgoing API calls, to translate the first incoming API responses into first outgoing API responses representing search query results, and to send the first outgoing API responses to the one or more devices, to determine that a test corpus of files has been stored by the first system of record, in response to the request, to send, to the first API endpoint, at least a first API call corresponding to at least a first search query identified in a judgment list, the judgment list further including first data indicating a relevancy of at least one file of the test corpus of files to the first search query, to receive, from the first search integration component, a first API response to the first API call, the first API response identifying one or more files stored by the first system of record, and to determine a first accuracy score for the first search integration component based at least in part the first data and the one or more files identified in the first API response.

In some embodiments, at least one non-transitory computer-readable medium may be encoded with instructions which, when executed by at least one processor of a computing system, cause the computing system to receive a request to test accuracy of a first search integration component for a first system of record, the first search integration component being configured to receive, at a first application programming interface (API) endpoint and from one or more devices, first incoming API calls representing search queries, to translate the first incoming API calls into outgoing API calls to be sent to the first system of record, to send the first outgoing API calls to one or more second API endpoints of the first system of record, to receive, from the first system of record, first incoming API responses to the first outgoing API calls, to translate the first incoming API responses into first outgoing API responses representing search query results, and to send the first outgoing API responses to the one or more devices, to determine that a test corpus of files has been stored by the first system of record, in response to the request, to send, to the first API endpoint, at least a first API call corresponding to at least a first search query identified in a judgment list, the judgment list further including first data indicating a relevancy of at least one file of the test corpus of files to the first search query, to receive, from the first search integration component, a first API response to the first API call, the first API response identifying one or more files stored by the first system of record, and to determine a first accuracy score for the first search integration component based at least in part the first data and the one or more files identified in the first API response.

### BRIEF DESCRIPTION OF THE DRAWINGS

Objects, aspects, features, and advantages of embodiments disclosed herein will become more fully apparent from the following detailed description, the appended claims, and the accompanying figures in which like reference numerals identify similar or identical elements. Reference numerals that are introduced in the specification in association with a figure may be repeated in one or more subsequent figures without additional description in the specification in order to provide context for other features, and not every element may be labeled in every figure. The drawings are not necessarily to scale, emphasis instead being placed upon illustrating embodiments, principles and concepts. The drawings are not intended to limit the scope of the claims included herewith.
FIG. 1A is a diagram illustrating example operations of a system for facilitating access to application programming interface (API) integrations in accordance with some aspects of the present disclosure;
FIG. 1B illustrates an example application view with a federated search input and corresponding search results, in accordance with some embodiments;
FIG. 1C is a diagram illustrating example operations of a system for evaluating search API integrations, in accordance with some aspects of the present disclosure;
FIG. 2 is a diagram of a network environment in which some embodiments of the present disclosure may be deployed;
FIG. 3 is a block diagram of a computing system that may be used to implement one or more of the components of the computing environment shown in FIG. 2 in accordance with some embodiments;
FIG. 4 is a schematic block diagram of a cloud computing environment in which various aspects of the disclosure may be implemented;
FIG. 5A is a block diagram of an example system in which resource management services may manage and streamline access by clients to resource feeds (via one or more gateway services) and/or software-as-a-service (SaaS) applications;
FIG. 5B is a block diagram showing an example implementation of the system shown in FIG. 5A in which various resource management services as well as a gateway service are located within a cloud computing environment;
FIG. 5C is a block diagram similar to that shown in FIG. 5B but in which the available resources are represented by a single box labeled "systems of record," and further in which several different services are included among the resource management services;
FIG. 5D shows how a display screen may appear when an intelligent activity feed feature of a multi-resource management system, such as that shown in FIG. 5C, is employed;
FIG. 6 is a block diagram of an example system in which a search integration testing service may perform evaluations of a search integration component for a specific system of record, in accordance with some embodiments;
FIG. 7 illustrates an example judgment list, in accordance with some embodiments;
FIG. 8 illustrates an example test interface for initiating an evaluation of a search integration component, in accordance with some embodiments;
FIG. 9 illustrates an example routine that may be performed by the integration development engine for incorporating a search integration component and executing an evaluation of the search integration component, in accordance with some embodiments; and
FIG. 10 illustrates an example routine that may be performed by the search integration testing service for performing an evaluation of the search integration component, in accordance with some embodiments.

### DETAILED DESCRIPTION

For purposes of reading the description of the various embodiments below, the following descriptions of the sections of the specification and their respective contents may be helpful:

Section A provides an introduction to example embodiments of a system for evaluating the quality of search API integrations in accordance with some aspects of the present disclosure;

Section B describes a network environment which may be useful for practicing embodiments described herein;

Section C describes a computing system which may be useful for practicing embodiments described herein;

Section D describes embodiments of systems and methods for accessing computing resources using a cloud computing environment;

Section E describes embodiments of systems and methods for managing and streamlining access by clients to a variety of resources;

Section F provides a more detailed description of example embodiments of the system introduced in Section A; and

Section G describes example implementations of methods, systems/devices, and computer-readable media in accordance with the present disclosure.

### A. Introduction to Illustrative Embodiments of a System for Evaluating the Quality of Search API Integrations

Service providers may develop integrations to interact with systems of record for various purposes. In some implementations, an API integration provider service may be configured to not only host API integrations for various systems of record, but also make those API integrations directly accessible to clients via integration API endpoints (EPs). For example, a client may send an API call to one of the integration API EPs and, in response to that API call, the API integration provider service may invoke one or more API integrations to interact with one or more systems of record in a manner defined by such integration(s). Such API integration(s) may, for example, include respective scripts or other executable files that may execute processes to generate and send one or more API calls to one or more system of record (SOR) API EPs based on the API call received from the client. Such API integration(s) may also receive one or more responses from the SOR API EP(s). In some cases, an API integration may translate data in the API call received from the client to match an input schema of a particular SOR API EP, and may translate data in system of record response(s) to conform to a standard output schema. The API integration provider service may thus provide one or more integration API EP(s) that the client may use to access functionality of various systems of record using API calls having a consistent format. In some cases, the API integration provider service may send the API call(s) to the SOR API EP(s) via an HTTP proxy service, which may retrieve client credentials to authenticate the API call(s) on behalf of the client before forwarding the API call(s) to the SOR API EP(s), thus allowing a system of record to provide a response based on information associated with a client profile or account.

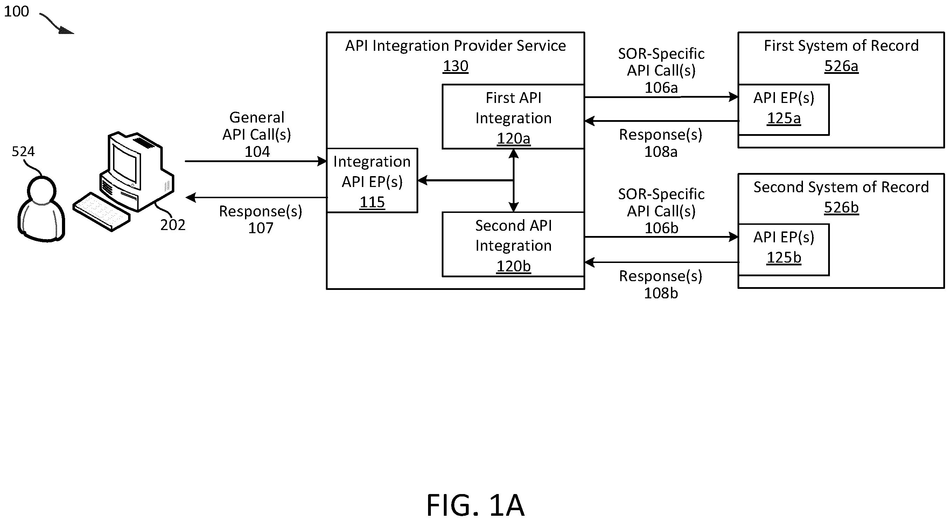

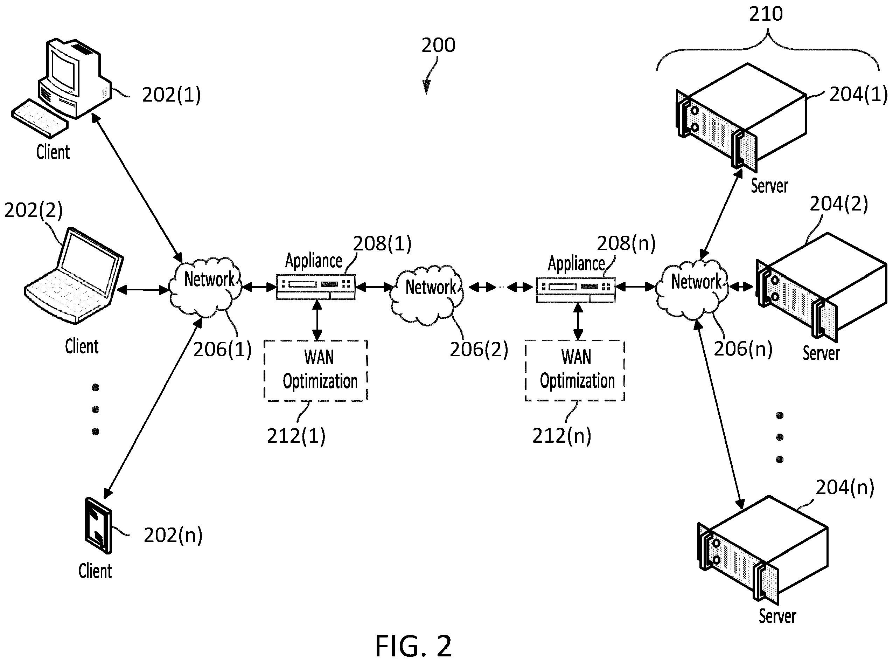

FIG. 1A is a diagram illustrating example operations of a system 100 for facilitating access to API integrations in accordance with some aspects of the present disclosure. As shown, the system 100 may include an API integration provider service 130 that hosts at least a first API integration 120a and a second API integration 120b (collectively, API integrations 120), and that exposes those API integrations 120 to a client 202 via one or more integration API EPs 115. The API integration provider service 130 may be provided by a server or other computing system accessible to one or more client devices and/or client applications; for example, and without limitation, a server 204, a cloud computing environment 400, and/or a cloud computing environment 512, etc. Although illustrated as a computer operated by a user 524, it should be appreciated that the client 202 may take on any of numerous other forms and need not be user-operated. Several example of clients 202 that may interact with the API integration provider service 130 via the integration API EP(s) 115 are described further in reference to FIG. 2. The client 202 may interact with the respective integration API EPs 115 directly; for example, by sending an API call to an integration API EP 115 and receiving a response. The respective API integrations 120a, 120b may include scripts or other executable code that may be invoked when an API call is received from the client 202. An invoked script may initiate a process to send one or more API calls to one or more SOR API EPs 125 on behalf of the client 202, and to return a response to the client 202 that is based on one or more responses received from such SOR API EP(s) 125. Thus, an API integration 120 may be configured to interact with a system of record 526 to perform one or more particular operations and/or obtain one or more particular results, and that API integration 120 may describe an integration API EP 115 that the API integration provider service 130 may expose to one or more clients 202 to provide the clients seamless access to such functionality.

The API integration provider service 130 may be local to the client 202 (e.g., on the same local area network) or may be implemented by one or more remove servers 204 (examples of which are described below). The client 202 may communicate with the API integration provider service 130 over one or more computer networks 206 (examples of which are described below). The API integration provider service 130 may communicate with the systems of record 526 over the same or other computer networks. As noted above, the client 202 may access the API integration provider service 130 via the integration API EP(s) 115, and the API integration provider service 130 may access the systems of record 526 via the SOR API EP(s) 125.

The API integration provider service 130 may receive one or more general API calls 104 from the client 202 at one or more integration API EPs 115. The integration API EP 115 may have standardized input/output schemas; for example, that may be independent of input/output schemas used by the SOR API EPs 125. Thus, a client 202 may make API calls in the standardized format independent of which system of record is ultimately accessed. In response to such general API call(s) 104, the first API integration 120a may execute the first process and/or the second API integration 120b may execute the second process. The API integrations 120 may execute processes to translate or otherwise reformat data from the general API call 104 into a format used by the SOR API EPs 125. Thus, the first API integration 120a may execute a first process during which it makes one or more system of record-specific API calls 106a to one or more SOR API EPs 125a hosted by the first system of record 526a. The second API integration 120b may execute a second process during which it makes one or more system of record-specific API calls 106b to one or more SOR API EPs 125b hosted by the second system of record 526b. As part of the first and/or second processes, the API integration(s) 120 may receive and process response(s) 108a, 108b from the system(s) of record 526, and may send one or more responses 107 to the client 202 via the integration API EP(s) 115 that received the general API call(s) 104 from the client 202. In some implementations, the first and/or second processes may translate data in the general API call 104 to match API EP input schema(s) of the SOR API EP(s) 125. The first and/or second processes employed by the API integrations 120 may additionally translate data in the system of record response(s) 108a, 108b to match an API EP output schema of the integration API EP 115 to which the client 202 sent the general API call 104.

Although not illustrated in FIG. 1A, it should be appreciated that, in some implementations, the API integration provider service 130, or perhaps a separate service, may additionally provide an integration "discovery" service to client devices 202. For instance, individual API integrations 120 that are hosted by the service 130 may be assigned one or more type identifiers, and a client device 202 may send a query to the integration discovery service to identify the API integrations 120 of a particular type to which the client device 202 has access rights. For example, an application on the client device 202 (e.g., the resource access application 522 describe in Section E) may query the integration discovery service for the API integrations 120 of a type "search" to which the client device 202 has access rights. In response to such a query, the integration discovery service may return a list of accessible search API integrations 120, as well as corresponding URLs of the integration API EPs 115 for the respective integrations. The requesting application may then be responsible for selecting, either automatically or at the direction of a user 524, some or all of the identified integrations 120 to which a general API call 104 is to be sent, as well as for sending those general API calls 104 to the integration API EPs 115 of the selected integrations and processing the returned responses 107 from those API EPs 115. Such an integration discovery service is described in U.S. Patent Application No. 17/505,065, filed October 19, 2021, and entitled "Facilitating Access to API Integrations," the entire contents of which is incorporated herein by reference.

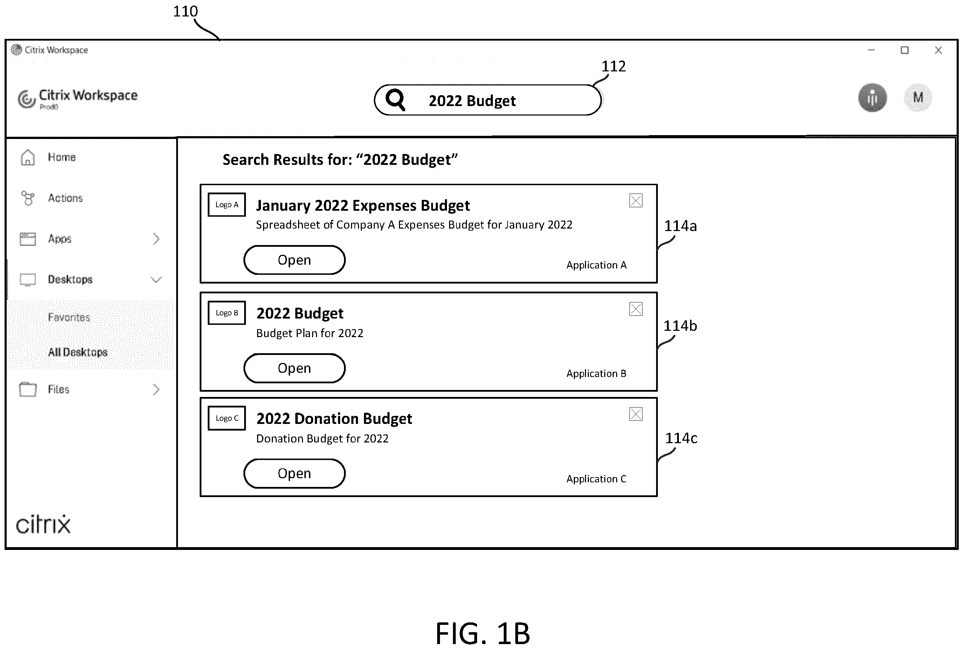

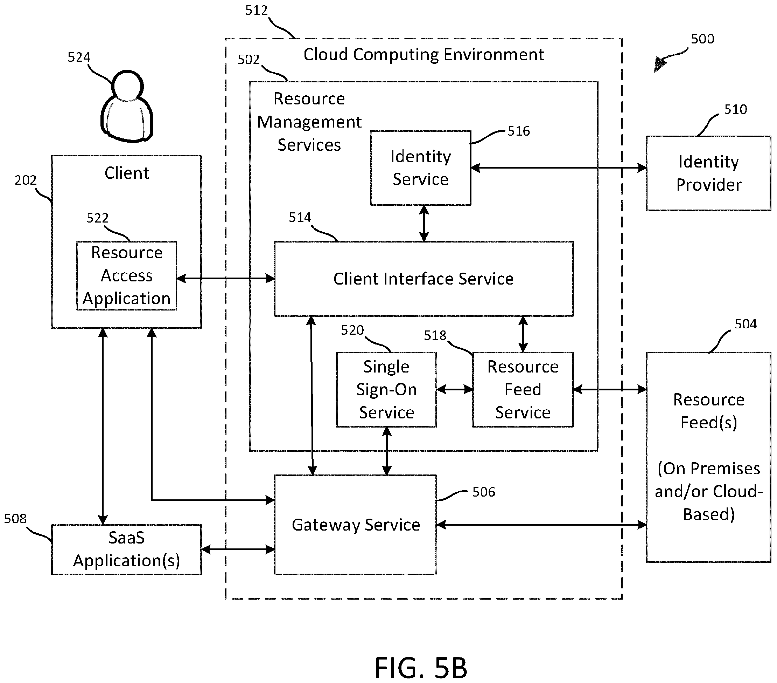

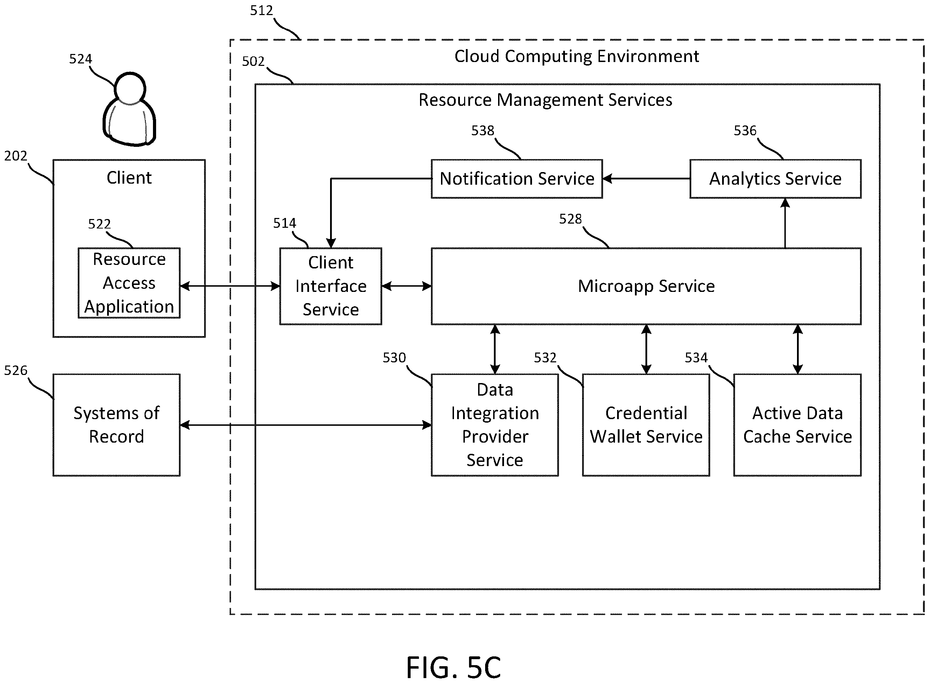

FIG. 1B illustrates an example application view 110 with a federated search input and corresponding search results, in accordance with some embodiments of the present disclosure. In some implementations, the application view 110 may be a graphical user interface (GLTI) provided by an intelligent workspace platform such as Citrix Workspace^{™}. For instance, in some implementations, the application view 110 may be generated by the resource access application 522 shown in FIGS. 5B and 5C. As shown in FIG. 1B, the application view 110 may provide a global search input box 112 for a user to enter search terms and execute a federated search. A search initiated from the global search input box 112 may use the input search terms to generate a search query that is sent to one or more integration API EPs 115 of the API integration provider service 130 (shown in FIG. 1A). For example, in some implementations, in response to a user 524 clicking on or otherwise selecting the global search input box 112, or perhaps instead in response to submitting a search query already entered in the global search input box 112, the resource access application 522 may send a query to an integration discovery service to identify accessible API integrations 120 of the type "search," and, in response to that query, may receive URLs of the API EPs 115 for one or more API integrations 120 hosted by the API integration provider service 130 that are configured to provide search functionality for systems of record 526. Such API integrations 120 are referred to herein as "search API integrations." The resource access application 522 may thereafter send the same general API call 104 to all of the identified URLs. Alternatively, the resource access application 522 may provide a user interface feature (e.g., a set of checkboxes) that allows the user 524 to select the systems of record 526 that are to be searched, and the resource access application 522 may send the general API call to the URLs of the API endpoints 115 for only the search API integrations 120 that are associated with the selected systems of record 526.

In response to receipt of such a search query by one or more integration API EPs 115, one or more corresponding search API integrations 120 of the API integration provider service 130 may execute one or more scripts to generate one or more SOR-specific API calls 106a, 106b to one or more of the available SORs 526. Such search API integration(s) 120 may further process the API response(s) 108a, 108b received from such SOR(s) 526 and execute one or more additional scripts to generate response(s) 107 to return to the requesting client 202, e.g., in response to a request by the resource access application 522. The global search input box 112 and the API integration provider service 130 may thus together enable searching multiple sources (e.g., SORs 526) and multiple content types using a single query. The query may comprise one or more query terms. As shown in FIG. 1B, upon executing such a federated search, the application view 110 may display search results 114a, 114b, 114c obtained from the various SORs 526.

The foregoing federated search functionality can be a useful tool for a user 524 to globally search one or more SORs 526 for relevant files corresponding to a search query. However, the utility of such a tool may be limited if the search functionality across different SORs 526 is not standardized and reliable (i.e., the search API integrations 120 for two SORs 526 with the same files should return the same search results). Thus, in accordance with the present disclosure, to promote the standardization and reliability of searching, a uniform evaluation technique, such as the use of a judgment list, may be used to evaluate the quality of search API integrations 120 for SORs 526. Offered are systems and techniques to accurately gauge the quality of search API integrations 120 for respective SORs (e.g., SOR 526a, 526b), where the integrations may include translating a standardized abstract query language of a federated search to the query languages of the respective SORs 526 and translating the search results returned from the SOR into a standardized search results format. These systems and techniques may normalize the testing of search API integrations 120 across SORs 526 and measure consistently the quality of a given search API integration 120.

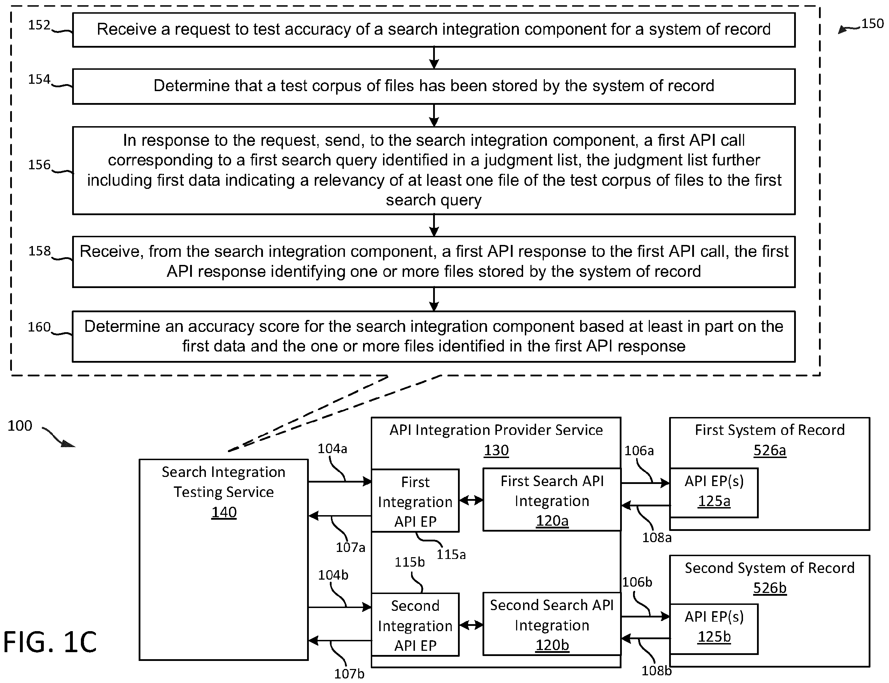

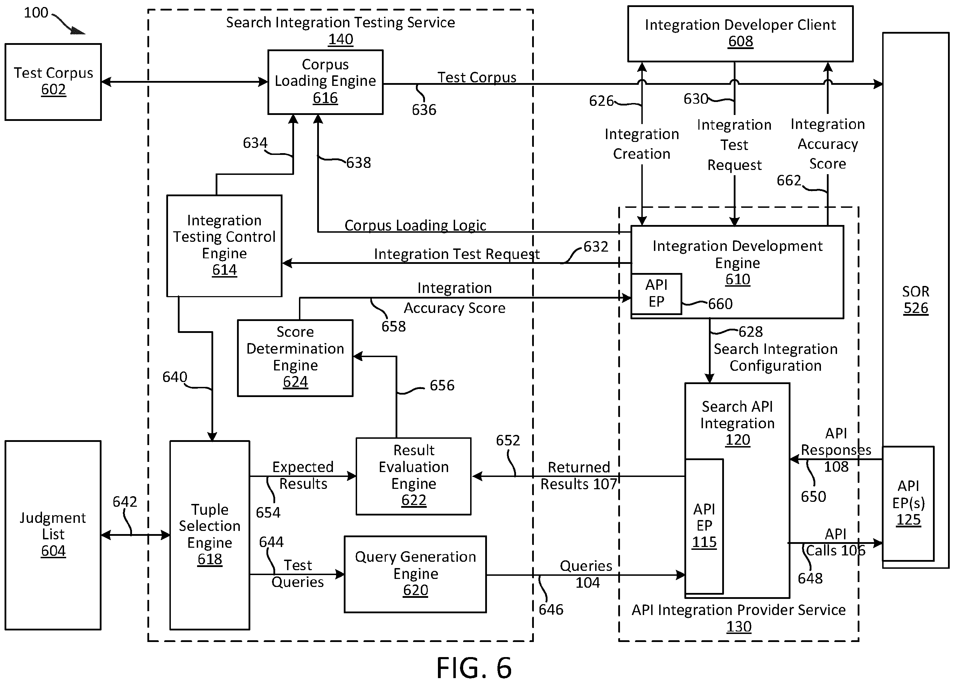

FIG. 1C is a diagram illustrating example operations of a system 100 for evaluating search API integrations 120 in accordance with some aspects of the present disclosure. As shown, a search integration testing service 140 may be introduced to the system 100 to facilitate standardized testing of one or more search API integrations 120 corresponding to respective SORs 526. As explained further below, with reference to FIG. 6, the search integration testing service 140 may employ at least one test corpus 602 and at least one judgment list 604 to evaluate individual search API integrations 120a, 120b.

FIG. 1C further shows an example routine 150 that may be performed by the search integration testing service 140. As shown in FIG. 1C, at a step 152 of the routine 150, the search integration testing service 140 may receive a request to test the accuracy of a search integration component (e.g., the first search API integration 120a) for a system of record (e.g., the SOR 526a). In some implementations, the first search integration component (e.g., the first search API integration 120a) may be configured to receive, at a first integration API EP 115a, incoming API calls 104a representing search queries. In some implementations, the search integration component (e.g., the first search API integration 120a) may be configured to translate individual incoming, general API calls 104a into one or more SOR-specific API call(s) 106a and to send such SOR-specific API call(s) 106a to one or more API endpoints (e.g., API EP 125a) of the system of record (e.g., the SOR 526a).

In some implementations, the search integration component (e.g., the first search API integration 120a) may further be configured to receive, from the system of record (e.g., the SOR 526a), one or more API responses 108a to the SOR-specific API call(s) 106a. In some implementations, the search integration component (e.g., the first search API integration 120a) may be configured to translate the incoming API response(s) 108a into outgoing API responses 107a representing search query results. In some implementations, the search integration component (e.g., the first search API integration 120a) may be configured to send the outgoing API response(s) 107a to the component that sent the incoming API call 104a.

Referring again to FIG. 1C, at step 154 of the routine 150, the search integration testing service 140 may determine that a test corpus of files (e.g., the test corpus 602 described below in connection with FIG. 6) has been stored by the system of record (e.g., the SOR 526a).

In response to the request (per the step 152), at step 156 of the routine 150, the search integration testing service 140 may send, to the search integration component (e.g., to an integration API endpoint 115a for the first search API integration 120a), at least a first API call 104a corresponding to at least a first search query identified in a judgment list (e.g., the judgment list 604 described below in connection with FIG. 6), the judgment list further including first data indicating a relevancy of at least one file of the test corpus of files to the first search query.

At step 158 of the routine 150, the search integration testing service 140 may receive, from the search integration component (e.g., the first search API integration 120a), a first API response 107a to the first API call 104a, with the first API response 107a identifying one or more files stored by the system of record (e.g., the SOR 526a).

At step 160 of the routine 150, the search integration testing service 140 may determine an accuracy score for the search integration component (e.g., the first search API integration 120a) based at least in part the first data and the one or more files identified in the first API response 107a.

In some implementations, the same test corpus 602 and judgment list 604 may also be used to evaluate different search integration components 120 for other systems of record 526, and thus promote a consistent federated search performance. For example, in some implementations, the search integration testing service 140 may receive a second request to test the accuracy of a second search integration component (e.g., the second search API integration 120b) for a second system of record (e.g., the SOR 526b). Similar to the first search integration component (e.g., the first search API integration 120a), the second search integration component (e.g., the second search API integration 120b) may be configured to receive, at a second API integration API EP 115b, general API calls 104b representing search queries. In some implementations, the second search integration component (e.g., the second search API integration 120b) may translate individual incoming, general API call(s) 104b into one or more SOR-specific API call(s) 106b, and to send such SOR-specific API call(s) 106b to one or more API endpoints (e.g., API EP(s) 125b) of the second system of record (e.g., the SOR 526b).

In some implementations, the second search integration component (e.g., the second search API integration 120b) may further be configured to receive, from the second system of record (e.g., the SOR 526b), one or more API responses 108b to the SOR-specific API call(s) 106b, to translate the incoming API responses 108b into an outgoing API response 107b representing search query results, and to send the outgoing API response 107b to the component that sent the incoming API call 104a.

In some implementations, the first integration API EP 115a and the second API integration EP 115b may have the same input schema (e.g., the standardized abstract query language of the federated search). In some implementations, the first search integration component (e.g., the first search API integration 120a) may have a first output schema and the second search integration component (e.g., the second search API integration 120b) may have a second output schema, the first output schema being different than the second output schema.

In some implementations, the judgment list 604 may include multiple search queries to evaluate respective search integration components (e.g., the first search API integration 120a and the second search API integration 120b). In some implementations, the search integration testing service 140 may send to the first integration API EP 115a for the first search integration component (e.g., the first search API integration 120a), at least a second API call 104a corresponding to at least a second search query identified in the judgment list 604, the judgment list 604 further including second data indicating a relevancy of at least one file of the test corpus 602 of files to the second search query. In some implementations, the search integration testing service 140 may receive from the first search integration component (e.g., the first search API integration 120a), a second API response 107a to the second API call 104a, the second API response 107a identifying one or more files stored by the system of record (e.g., the SOR 526a). In some implementations, the search integration testing service 140 may determine a second accuracy score for the first search integration component (e.g., the first search API integration 120a) based at least in part the second data and the one or more files identified in the second API response 107a. In some implementations, the search integration testing service 140 may aggregate, as a global score, the first accuracy score and the second accuracy score and send the global score to the system of record (e.g., the SOR 526a) and/or to some other computing device that sent the request (per the step 152 of the routine 150) to test the quality of the first search integration component (e.g., the first search API integration 120a).

In some implementations, the search integration testing service 140 may determine that the first accuracy score satisfies an accuracy threshold and, in response to such a determination, may automatically approve, and perhaps automatically bring on-line, the first search integration component (e.g., the first search API integration 120a) for operation within the API integration provider service 130. In some implementations, a search query identified in the judgment list 604 may be configured to perform a phrase search. In some implementations, a search query identified in the judgment list 604 may be configured to perform a synonym search.

The API integrations 120 described above may be composed of several components that are supported by representational state transfer (REST) APIs. Such components may, for example, include a property describing the API integration 120, executable code such as scripts for performing processes, and/or definitions of the system of record API EPs 125 (e.g., including a URL, the name of system of record 526, HTTP verb(s) available, input schema, output schema, category, etc.). Further, as described above, such API integrations 120 may be accessed via one or more integration API EPs 115. The integration API endpoints 115 may be made available to any of a number of types of clients 202, such as user-operated computing devices or systems, applications (e.g., a resource access application, a search or other content service, etc.), and/or microapps such as those discussed in Section E below.

### B. Network Environment

Referring to FIG. 2, an illustrative network environment 200 is depicted. As shown, the network environment 200 may include one or more clients 202(1)-202(n) (also generally referred to as local machine(s) 202 or client(s) 202) in communication with one or more servers 204(1)-204(n) (also generally referred to as remote machine(s) 204 or server(s) 204) via one or more networks 206(1)-206(n) (generally referred to as network(s) 206). In some embodiments, a client 202 may communicate with a server 204 via one or more appliances 208(1)-208(n) (generally referred to as appliance(s) 208 or gateway(s) 208). In some embodiments, a client 202 may have the capacity to function as both a client node seeking access to resources provided by a server 204 and as a server 204 providing access to hosted resources for other clients 202.

Although the embodiment shown in FIG. 2 shows one or more networks 206 between the clients 202 and the servers 204, in other embodiments, the clients 202 and the servers 204 may be on the same network 206. When multiple networks 206 are employed, the various networks 206 may be the same type of network or different types of networks. For example, in some embodiments, the networks 206(1) and 206(n) may be private networks such as local area network (LANs) or company Intranets, while the network 206(2) may be a public network, such as a metropolitan area network (MAN), wide area network (WAN), or the Internet. In other embodiments, one or both of the network 206(1) and the network 206(n), as well as the network 206(2), may be public networks. In yet other embodiments, all three of the network 206(1), the network 206(2) and the network 206(n) may be private networks. The networks 206 may employ one or more types of physical networks and/or network topologies, such as wired and/or wireless networks, and may employ one or more communication transport protocols, such as transmission control protocol (TCP), internet protocol (IP), user datagram protocol (UDP) or other similar protocols. In some embodiments, the network(s) 206 may include one or more mobile telephone networks that use various protocols to communicate among mobile devices. In some embodiments, the network(s) 206 may include one or more wireless local-area networks (WLANs). For short range communications within a WLAN, clients 202 may communicate using 802.11, Bluetooth, and/or Near Field Communication (NFC).

As shown in FIG. 2, one or more appliances 208 may be located at various points or in various communication paths of the network environment 200. For example, the appliance 208(1) may be deployed between the network 206(1) and the network 206(2), and the appliance 208(n) may be deployed between the network 206(2) and the network 206(n). In some embodiments, the appliances 208 may communicate with one another and work in conjunction to, for example, accelerate network traffic between the clients 202 and the servers 204. In some embodiments, appliances 208 may act as a gateway between two or more networks. In other embodiments, one or more of the appliances 208 may instead be implemented in conjunction with or as part of a single one of the clients 202 or servers 204 to allow such device to connect directly to one of the networks 206. In some embodiments, one of more appliances 208 may operate as an application delivery controller (ADC) to provide one or more of the clients 202 with access to business applications and other data deployed in a datacenter, the cloud, or delivered as Software as a Service (SaaS) across a range of client devices, and/or provide other functionality such as load balancing, etc. In some embodiments, one or more of the appliances 208 may be implemented as network devices sold by Citrix Systems, Inc., of Fort Lauderdale, FL, such as Citrix Gateway^{™} or Citrix ADC^{™}.

A server 204 may be any server type such as, for example: a file server; an application server; a web server; a proxy server; an appliance; a network appliance; a gateway; an application gateway; a gateway server; a virtualization server; a deployment server; a Secure Sockets Layer Virtual Private Network (SSL VPN) server; a firewall; a web server; a server executing an active directory; a cloud server; or a server executing an application acceleration program that provides firewall functionality, application functionality, or load balancing functionality.

A server 204 may execute, operate or otherwise provide an application that may be any one of the following: software; a program; executable instructions; a virtual machine; a hypervisor; a web browser; a web-based client; a client-server application; a thin-client computing client; an ActiveX control; a Java applet; software related to voice over internet protocol (VoIP) communications like a soft IP telephone; an application for streaming video and/or audio; an application for facilitating real-time-data communications; a HTTP client; a FTP client; an Oscar client; a Telnet client; or any other set of executable instructions.

In some embodiments, a server 204 may execute a remote presentation services program or other program that uses a thin-client or a remote-display protocol to capture display output generated by an application executing on a server 204 and transmit the application display output to a client device 202.

In yet other embodiments, a server 204 may execute a virtual machine providing, to a user of a client 202, access to a computing environment. The client 202 may be a virtual machine. The virtual machine may be managed by, for example, a hypervisor, a virtual machine manager (VMM), or any other hardware virtualization technique within the server 204.

As shown in FIG. 2, in some embodiments, groups of the servers 204 may operate as one or more server farms 210. The servers 204 of such server farms 210 may be logically grouped, and may either be geographically co-located (e.g., on premises) or geographically dispersed (e.g., cloud based) from the clients 202 and/or other servers 204. In some embodiments, two or more server farms 210 may communicate with one another, e.g., via respective appliances 208 connected to the network 206(2), to allow multiple server-based processes to interact with one another.

As also shown in FIG. 2, in some embodiments, one or more of the appliances 208 may include, be replaced by, or be in communication with, one or more additional appliances, such as WAN optimization appliances 212(1)-212(n), referred to generally as WAN optimization appliance(s) 212. For example, WAN optimization appliances 212 may accelerate, cache, compress or otherwise optimize or improve performance, operation, flow control, or quality of service of network traffic, such as traffic to and/or from a WAN connection, such as optimizing Wide Area File Services (WAFS), accelerating Server Message Block (SMB) or Common Internet File System (CIFS). In some embodiments, one or more of the appliances 212 may be a performance enhancing proxy or a WAN optimization controller.

In some embodiments, one or more of the appliances 208, 212 may be implemented as products sold by Citrix Systems, Inc., of Fort Lauderdale, FL, such as Citrix SD-WAN^{™} or Citrix Cloud^{™}. For example, in some implementations, one or more of the appliances 208, 212 may be cloud connectors that enable communications to be exchanged between resources within a cloud computing environment and resources outside such an environment, e.g., resources hosted within a data center of+ an organization.

### C. Computing Environment

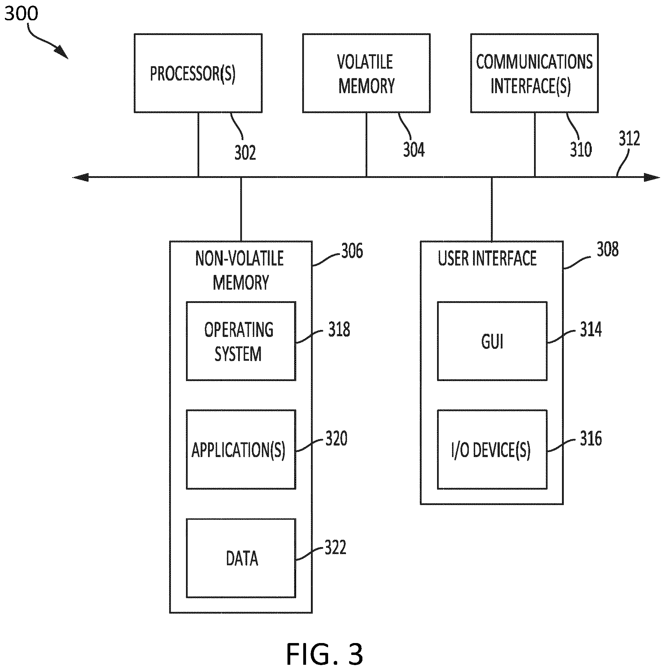

FIG. 3 illustrates an example of a computing system 300 that may be used to implement one or more of the respective components (e.g., the clients 202, the servers 204, and the appliances 208, 212) within the network environment 200 shown in FIG. 2. As shown in FIG. 3, the computing system 300 may include one or more processors 302, volatile memory 304 (e.g., RAM), non-volatile memory 306 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), a user interface (UI) 308, one or more communications interfaces 310, and a communication bus 312. The user interface 308 may include a graphical user interface (GUI) 314 (e.g., a touchscreen, a display, etc.) and one or more input/output (I/O) devices 316 (e.g., a mouse, a keyboard, etc.). The non-volatile memory 306 may store an operating system 318, one or more applications 320, and data 322 such that, for example, computer instructions of the operating system 318 and/or applications 320 are executed by the processor(s) 302 out of the volatile memory 304. Data may be entered using an input device of the GUI 314 or received from I/O device(s) 316. Various elements of the computing system 300 may communicate via communication the bus 312. The computing system 300 as shown in FIG. 3 is shown merely as an example, as the clients 202, servers 204 and/or appliances 208 and 212 may be implemented by any computing or processing environment and with any type of machine or set of machines that may have suitable hardware and/or software capable of operating as described herein.

The processor(s) 302 may be implemented by one or more programmable processors executing one or more computer programs to perform the functions of the system. As used herein, the term "processor" describes an electronic circuit that performs a function, an operation, or a sequence of operations. The function, operation, or sequence of operations may be hard coded into the electronic circuit or soft coded by way of instructions held in a memory device. A "processor" may perform the function, operation, or sequence of operations using digital values or using analog signals. In some embodiments, the "processor" can be embodied in one or more application specific integrated circuits (ASICs), microprocessors, digital signal processors, microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors.

The communications interfaces 310 may include one or more interfaces to enable the computing system 300 to access a computer network such as a Local Area Network (LAN), a Wide Area Network (WAN), a Personal Area Network (PAN), or the Internet through a variety of wired and/or wireless connections, including cellular connections.

As noted above, in some embodiments, one or more computing systems 300 may execute an application on behalf of a user of a client computing device (e.g., a client 202 shown in FIG. 2), may execute a virtual machine, which provides an execution session within which applications execute on behalf of a user or a client computing device (e.g., a client 202 shown in FIG. 2), such as a hosted desktop session, may execute a terminal services session to provide a hosted desktop environment, or may provide access to a computing environment including one or more of: one or more applications, one or more desktop applications, and one or more desktop sessions in which one or more applications may execute.

### D. Systems and Methods for Delivering Shared Resources Using a Cloud Computing Environment

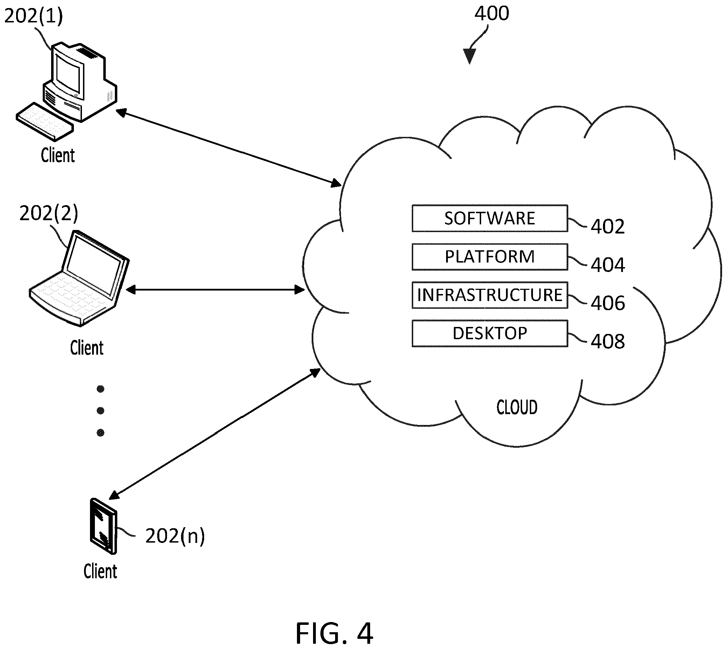

Referring to FIG. 4, a cloud computing environment 400 is depicted, which may also be referred to as a cloud environment, cloud computing or cloud network. The cloud computing environment 400 can provide the delivery of shared computing services and/or resources to multiple users or tenants. For example, the shared resources and services can include, but are not limited to, networks, network bandwidth, servers, processing, memory, storage, applications, virtual machines, databases, software, hardware, analytics, and intelligence.

In the cloud computing environment 400, one or more clients 202 (such as those described in connection with FIG. 2) are in communication with a cloud network 404. The cloud network 404 may include back-end platforms, e.g., servers, storage, server farms and/or data centers. The clients 202 may correspond to a single organization/tenant or multiple organizations/tenants. More particularly, in one example implementation, the cloud computing environment 400 may provide a private cloud serving a single organization (e.g., enterprise cloud). In another example, the cloud computing environment 400 may provide a community or public cloud serving multiple organizations/tenants.

In some embodiments, a gateway appliance(s) or service may be utilized to provide access to cloud computing resources and virtual sessions. By way of example, Citrix Gateway, provided by Citrix Systems, Inc., may be deployed on-premises or on public clouds to provide users with secure access and single sign-on to virtual, SaaS and web applications. Furthermore, to protect users from web threats, a gateway such as Citrix Secure Web Gateway may be used. Citrix Secure Web Gateway uses a cloud-based service and a local cache to check for URL reputation and category.

In still further embodiments, the cloud computing environment 400 may provide a hybrid cloud that is a combination of a public cloud and one or more resources located outside such a cloud, such as resources hosted within one or more data centers of an organization. Public clouds may include public servers that are maintained by third parties to the clients 202 or the enterprise/tenant. The servers may be located off-site in remote geographical locations or otherwise. In some implementations, one or more cloud connectors may be used to facilitate the exchange of communications between one more resources within the cloud computing environment 400 and one or more resources outside of such an environment.

The cloud computing environment 400 can provide resource pooling to serve multiple users via clients 202 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the cloud computing environment 400 can provide on-demand self-service to unilaterally provision computing capabilities (e.g., server time, network storage) across a network for multiple clients 202. By way of example, provisioning services may be provided through a system such as Citrix Provisioning Services (Citrix PVS). Citrix PVS is a software-streaming technology that delivers patches, updates, and other configuration information to multiple virtual desktop endpoints through a shared desktop image. The cloud computing environment 400 can provide an elasticity to dynamically scale out or scale in response to different demands from one or more clients 202. In some embodiments, the cloud computing environment 400 may include or provide monitoring services to monitor, control and/or generate reports corresponding to the provided shared services and resources.

In some embodiments, the cloud computing environment 400 may provide cloud-based delivery of different types of cloud computing services, such as Software as a service (SaaS) 402, Platform as a Service (PaaS) 404, Infrastructure as a Service (IaaS) 406, and Desktop as a Service (DaaS) 408, for example. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS platforms include AMAZON WEB SERVICES provided by Amazon, corn. Inc., of Seattle, Washington, Azure IaaS provided by Microsoft Corporation or Redmond, Washington, RACKSPACE CLOUD provided by Rackspace US, Inc., of San Antonio, Texas, Google Compute Engine provided by Google Inc. of Mountain View, California, and RIGHTSCALE provided by RightScale, Inc., of Santa Barbara, California.

PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California.

SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. Citrix ShareFile^{®} from Citrix Systems, DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Similar to SaaS, DaaS (which is also known as hosted desktop services) is a form of virtual desktop infrastructure (VDI) in which virtual desktop sessions are typically delivered as a cloud service along with the apps used on the virtual desktop. Citrix Cloud from Citrix Systems is one example of a DaaS delivery platform. DaaS delivery platforms may be hosted on a public cloud computing infrastructure, such as AZURE CLOUD from Microsoft Corporation of Redmond, Washington, or AMAZON WEB SERVICES provided by Amazon.com, Inc., of Seattle, Washington, for example. In the case of Citrix Cloud, Citrix Workspace app may be used as a single-entry point for bringing apps, files and desktops together (whether on-premises or in the cloud) to deliver a unified experience.

### E. Systems and Methods for Managing and Streamlining Access by Client Devices to a Variety of Resources

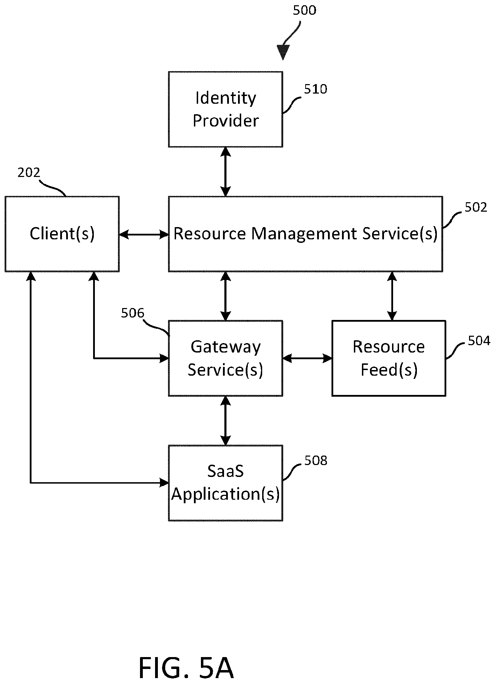

FIG. 5A is a block diagram of an example multi-resource access system 500 in which one or more resource management services 502 may manage and streamline access by one or more clients 202 to one or more resource feeds 504 (via one or more gateway services 506) and/or one or more software-as-a-service (SaaS) applications 508. In particular, the resource management service(s) 502 may employ an identity provider 510 to authenticate the identity of a user of a client 202 and, following authentication, identify one or more resources the user is authorized to access. In response to the user selecting one of the identified resources, the resource management service(s) 502 may send appropriate access credentials to the requesting client 202, and the client 202 may then use those credentials to access the selected resource. For the resource feed(s) 504, the client 202 may use the supplied credentials to access the selected resource via a gateway service 506. For the SaaS application(s) 508, the client 202 may use the credentials to access the selected application directly.

The client(s) 202 may be any type of computing devices capable of accessing the resource feed(s) 504 and/or the SaaS application(s) 508, and may, for example, include a variety of desktop or laptop computers, smartphones, tablets, etc. The resource feed(s) 504 may include any of numerous resource types and may be provided from any of numerous locations. In some embodiments, for example, the resource feed(s) 504 may include one or more systems or services for providing virtual applications and/or desktops to the client(s) 202, one or more file repositories and/or file sharing systems, one or more secure browser services, one or more access control services for the SaaS applications 508, one or more management services for local applications on the client(s) 202, one or more internet enabled devices or sensors, etc. The resource management service(s) 502, the resource feed(s) 504, the gateway service(s) 506, the SaaS application(s) 508, and the identity provider 510 may be located within an on-premises data center of an organization for which the multi-resource access system 500 is deployed, within one or more cloud computing environments, or elsewhere.

FIG. 5B is a block diagram showing an example implementation of the multi-resource access system 500 shown in FIG. 5A in which various resource management services 502 as well as a gateway service 506 are located within a cloud computing environment 512. The cloud computing environment may, for example, include Microsoft Azure Cloud, Amazon Web Services, Google Cloud, or IBM Cloud. It should be appreciated, however, that in other implementations, one or more (or all) of the components of the resource management services 502 and/or the gateway service 506 may alternatively be located outside the cloud computing environment 512, such as within a data center hosted by an organization.

For any of the illustrated components (other than the client 202) that are not based within the cloud computing environment 512, cloud connectors (not shown in FIG. 5B) may be used to interface those components with the cloud computing environment 512. Such cloud connectors may, for example, run on Windows Server instances and/or Linux Server instances hosted in resource locations and may create a reverse proxy to route traffic between those resource locations and the cloud computing environment 512. In the illustrated example, the cloud-based resource management services 502 include a client interface service 514, an identity service 516, a resource feed service 518, and a single sign-on service 520. As shown, in some embodiments, the client 202 may use a resource access application 522 to communicate with the client interface service 514 as well as to present a user interface on the client 202 that a user 524 can operate to access the resource feed(s) 504 and/or the SaaS application(s) 508. The resource access application 522 may either be installed on the client 202, or may be executed by the client interface service 514 (or elsewhere in the multi-resource access system 500) and accessed using a web browser (not shown in FIG. 5B) on the client 202.

As explained in more detail below, in some embodiments, the resource access application 522 and associated components may provide the user 524 with a personalized, all-in-one interface enabling instant and seamless access to all the user's SaaS and web applications, files, virtual Windows applications, virtual Linux applications, desktops, mobile applications, Citrix Virtual Apps and Desktops^{™}, local applications, and other data.

When the resource access application 522 is launched or otherwise accessed by the user 524, the client interface service 514 may send a sign-on request to the identity service 516. In some embodiments, the identity provider 510 may be located on the premises of the organization for which the multi-resource access system 500 is deployed. The identity provider 510 may, for example, correspond to an on-premises Windows Active Directory. In such embodiments, the identity provider 510 may be connected to the cloud-based identity service 516 using a cloud connector (not shown in FIG. 5B), as described above. Upon receiving a sign-on request, the identity service 516 may cause the resource access application 522 (via the client interface service 514) to prompt the user 524 for the user's authentication credentials (e.g., username and password). Upon receiving the user's authentication credentials, the client interface service 514 may pass the credentials along to the identity service 516, and the identity service 516 may, in turn, forward them to the identity provider 510 for authentication, for example, by comparing them against an Active Directory domain. Once the identity service 516 receives confirmation from the identity provider 510 that the user's identity has been properly authenticated, the client interface service 514 may send a request to the resource feed service 518 for a list of subscribed resources for the user 524.

In other embodiments (not illustrated in FIG. 5B), the identity provider 510 may be a cloud-based identity service, such as a Microsoft Azure Active Directory. In such embodiments, upon receiving a sign-on request from the client interface service 514, the identity service 516 may, via the client interface service 514, cause the client 202 to be redirected to the cloud-based identity service to complete an authentication process. The cloud-based identity service may then cause the client 202 to prompt the user 524 to enter the user's authentication credentials. Upon determining the user's identity has been properly authenticated, the cloud-based identity service may send a message to the resource access application 522 indicating the authentication attempt was successful, and the resource access application 522 may then inform the client interface service 514 of the successfully authentication. Once the identity service 516 receives confirmation from the client interface service 514 that the user's identity has been properly authenticated, the client interface service 514 may send a request to the resource feed service 518 for a list of subscribed resources for the user 524.

The resource feed service 518 may request identity tokens for configured resources from the single sign-on service 520. The resource feed service 518 may then pass the feed-specific identity tokens it receives to the points of authentication for the respective resource feeds 504. The resource feeds 504 may then respond with lists of resources configured for the respective identities. The resource feed service 518 may then aggregate all items from the different feeds and forward them to the client interface service 514, which may cause the resource access application 522 to present a list of available resources on a user interface of the client 202. The list of available resources may, for example, be presented on the user interface of the client 202 as a set of selectable icons or other elements corresponding to accessible resources. The resources so identified may, for example, include one or more virtual applications and/or desktops (e.g., Citrix Virtual Apps and Desktops^{™}, VMware Horizon, Microsoft RDS, etc.), one or more file repositories and/or file sharing systems (e.g., ShareFile^{®}, one or more secure browsers, one or more internet enabled devices or sensors, one or more local applications installed on the client 202, and/or one or more SaaS applications 508 to which the user 524 has subscribed. The lists of local applications and the SaaS applications 508 may, for example, be supplied by resource feeds 504 for respective services that manage which such applications are to be made available to the user 524 via the resource access application 522. Examples of SaaS applications 508 that may be managed and accessed as described herein include Microsoft Office 365 applications, SAP SaaS applications, Workday applications, etc.

For resources other than local applications and the SaaS application(s) 508, upon the user 524 selecting one of the listed available resources, the resource access application 522 may cause the client interface service 514 to forward a request for the specified resource to the resource feed service 518. In response to receiving such a request, the resource feed service 518 may request an identity token for the corresponding feed from the single sign-on service 520. The resource feed service 518 may then pass the identity token received from the single sign-on service 520 to the client interface service 514 where a launch ticket for the resource may be generated and sent to the resource access application 522. Upon receiving the launch ticket, the resource access application 522 may initiate a secure session to the gateway service 506 and present the launch ticket. When the gateway service 506 is presented with the launch ticket, it may initiate a secure session to the appropriate resource feed and present the identity token to that feed to seamlessly authenticate the user 524. Once the session initializes, the client 202 may proceed to access the selected resource.

When the user 524 selects a local application, the resource access application 522 may cause the selected local application to launch on the client 202. When the user 524 selects a SaaS application 508, the resource access application 522 may cause the client interface service 514 to request a one-time uniform resource locator (URL) from the gateway service 506 as well as a preferred browser for use in accessing the SaaS application 508. After the gateway service 506 returns the one-time URL and identifies the preferred browser, the client interface service 514 may pass that information along to the resource access application 522. The client 202 may then launch the identified browser and initiate a connection to the gateway service 506. The gateway service 506 may then request an assertion from the single sign-on service 520. Upon receiving the assertion, the gateway service 506 may cause the identified browser on the client 202 to be redirected to the logon page for identified SaaS application 508 and present the assertion. The SaaS may then contact the gateway service 506 to validate the assertion and authenticate the user 524. Once the user has been authenticated, communication may occur directly between the identified browser and the selected SaaS application 508, thus allowing the user 524 to use the client 202 to access the selected SaaS application 508.

In some embodiments, the preferred browser identified by the gateway service 506 may be a specialized browser embedded in the resource access application 522 (when the resource access application 522 is installed on the client 202) or provided by one of the resource feeds 504 (when the resource access application 522 is located remotely), e.g., via a secure browser service. In such embodiments, the SaaS applications 508 may incorporate enhanced security policies to enforce one or more restrictions on the embedded browser. Examples of such policies include (1) requiring use of the specialized browser and disabling use of other local browsers, (2) restricting clipboard access, e.g., by disabling cut/copy/paste operations between the application and the clipboard, (3) restricting printing, e.g., by disabling the ability to print from within the browser, (3) restricting navigation, e.g., by disabling the next and/or back browser buttons, (4) restricting downloads, e.g., by disabling the ability to download from within the SaaS application, and (5) displaying watermarks, e.g., by overlaying a screen-based watermark showing the username and IP address associated with the client 202 such that the watermark will appear as displayed on the screen if the user tries to print or take a screenshot. Further, in some embodiments, when a user selects a hyperlink within a SaaS application, the specialized browser may send the URL for the link to an access control service (e.g., implemented as one of the resource feed(s) 504) for assessment of its security risk by a web filtering service. For approved URLs, the specialized browser may be permitted to access the link. For suspicious links, however, the web filtering service may have the client interface service 514 send the link to a secure browser service, which may start a new virtual browser session with the client 202, and thus allow the user to access the potentially harmful linked content in a safe environment.

In some embodiments, in addition to or in lieu of providing the user 524 with a list of resources that are available to be accessed individually, as described above, the user 524 may instead be permitted to choose to access a streamlined feed of event notifications and/or available actions that may be taken with respect to events that are automatically detected with respect to one or more of the resources. This streamlined resource activity feed, which may be customized for individual users, may allow users to monitor important activity involving all of their resources-SaaS applications, web applications, Windows applications, Linux applications, desktops, file repositories and/or file sharing systems, and other data through a single interface, without needing to switch context from one resource to another. Further, event notifications in a resource activity feed may be accompanied by a discrete set of user interface elements, e.g., "approve," "deny," and "see more detail" buttons, allowing a user to take one or more simple actions with respect to events right within the user's feed. In some embodiments, such a streamlined, intelligent resource activity feed may be enabled by one or more micro-applications, or "microapps," that can interface with underlying associated resources using APIs or the like. The responsive actions may be user-initiated activities that are taken within the microapps and that provide inputs to the underlying applications through the API or other interface. The actions a user performs within the microapp may, for example, be designed to address specific common problems and use cases quickly and easily, adding to increased user productivity (e.g., request personal time off, submit a help desk ticket, etc.). In some embodiments, notifications from such event-driven microapps may additionally or alternatively be pushed to clients 202 to notify a user 524 of something that requires the user's attention (e.g., approval of an expense report, new course available for registration, etc.).

FIG. 5C is a block diagram similar to that shown in FIG. 5B but in which the available resources (e.g., SaaS applications, web applications, Windows applications, Linux applications, desktops, file repositories and/or file sharing systems, and other data) are represented by a single box 526 labeled "systems of record," and further in which several different services are included within the resource management services block 502. As explained below, the services shown in FIG. 5C may enable the provision of a streamlined resource activity feed and/or notification process for a client 202. In the example shown, in addition to the client interface service 514 discussed above, the illustrated services include a microapp service 528, a data integration provider service 530, a credential wallet service 532, an active data cache service 534, an analytics service 536, and a notification service 538. In various embodiments, the services shown in FIG. 5C may be employed either in addition to or instead of the different services shown in FIG. 5B. Further, as noted above in connection with FIG. 5B, it should be appreciated that, in other implementations, one or more (or all) of the components of the resource management services 502 shown in FIG. 5C may alternatively be located outside the cloud computing environment 512, such as within a data center hosted by an organization.

In some embodiments, a microapp may be a single use case made available to users to streamline functionality from complex enterprise applications. Microapps may, for example, utilize APIs available within SaaS, web, or home-grown applications allowing users to see content without needing a full launch of the application or the need to switch context. Absent such microapps, users would need to launch an application, navigate to the action they need to perform, and then perform the action. Microapps may streamline routine tasks for frequently performed actions and provide users the ability to perform actions within the resource access application 522 without having to launch the native application. The system shown in FIG. 5C may, for example, aggregate relevant notifications, tasks, and insights, and thereby give the user 524 a dynamic productivity tool. In some embodiments, the resource activity feed may be intelligently populated by utilizing machine learning and artificial intelligence (AI) algorithms. Further, in some implementations, microapps may be configured within the cloud computing environment 512, thus giving administrators a powerful tool to create more productive workflows, without the need for additional infrastructure. Whether pushed to a user or initiated by a user, microapps may provide short cuts that simplify and streamline key tasks that would otherwise require opening full enterprise applications. In some embodiments, out-of-the-box templates may allow administrators with API account permissions to build microapp solutions targeted for their needs. Administrators may also, in some embodiments, be provided with the tools they need to build custom microapps.

Referring to FIG. 5C, the systems of record 526 may represent the applications and/or other resources the resource management services 502 may interact with to create microapps. These resources may be SaaS applications, legacy applications, or homegrown applications, and can be hosted on-premises or within a cloud computing environment. Connectors with out-of-the-box templates for several applications may be provided and integration with other applications may additionally or alternatively be configured through a microapp page builder. Such a microapp page builder may, for example, connect to legacy, on-premises, and SaaS systems by creating streamlined user workflows via microapp actions. The resource management services 502, and in particular the data integration provider service 530, may, for example, support REST API, JSON, OData-JSON, and XML. As explained in more detail below, the data integration provider service 530 may also write back to the systems of record, for example, using OAuth2 or a service account.

In some embodiments, the microapp service 528 may be a single-tenant service responsible for creating the microapps. The microapp service 528 may send raw events, pulled from the systems of record 526, to the analytics service 536 for processing. The microapp service may, for example, periodically pull active data from the systems of record 526.

In some embodiments, the active data cache service 534 may be single-tenant and may store all configuration information and microapp data. It may, for example, utilize a per-tenant database encryption key and per-tenant database credentials.

In some embodiments, the credential wallet service 532 may store encrypted service credentials for the systems of record 526 and user OAuth2 tokens.

In some embodiments, the data integration provider service 530 may interact with the systems of record 526 to decrypt end-user credentials and write back actions to the systems of record 526 under the identity of the end-user. The write-back actions may, for example, utilize a user's actual account to ensure all actions performed are compliant with data policies of the application or other resource being interacted with.

In some embodiments, the analytics service 536 may process the raw events received from the microapp service 528 to create targeted scored notifications and send such notifications to the notification service 538.

Finally, in some embodiments, the notification service 538 may process any notifications it receives from the analytics service 536. In some implementations, the notification service 538 may store the notifications in a database to be later served in an activity feed. In other embodiments, the notification service 538 may additionally or alternatively send the notifications out immediately to the client 202 as a push notification to the user 524.

In some embodiments, a process for synchronizing with the systems of record 526 and generating notifications may operate as follows. The microapp service 528 may retrieve encrypted service account credentials for the systems of record 526 from the credential wallet service 532 and request a sync with the data integration provider service 530. The data integration provider service 530 may then decrypt the service account credentials and use those credentials to retrieve data from the systems of record 526. The data integration provider service 530 may then stream the retrieved data to the microapp service 528. The microapp service 528 may store the received systems of record data in the active data cache service 534 and also send raw events to the analytics service 536. The analytics service 536 may create targeted scored notifications and send such notifications to the notification service 538. The notification service 538 may store the notifications in a database to be later served in an activity feed and/or may send the notifications out immediately to the client 202 as a push notification to the user 524.

In some embodiments, a process for processing a user-initiated action via a microapp may operate as follows. The client 202 may receive data from the microapp service 528 (via the client interface service 514) to render information corresponding to the microapp. The microapp service 528 may receive data from the active data cache service 534 to support that rendering. The user 524 may invoke an action from the microapp, causing the resource access application 522 to send an action request to the microapp service 528 (via the client interface service 514). The microapp service 528 may then retrieve from the credential wallet service 532 an encrypted Oauth2 token for the system of record for which the action is to be invoked, and may send the action to the data integration provider service 530 together with the encrypted OAuth2 token. The data integration provider service 530 may then decrypt the OAuth2 token and write the action to the appropriate system of record under the identity of the user 524. The data integration provider service 530 may then read back changed data from the written-to system of record and send that changed data to the microapp service 528. The microapp service 528 may then update the active data cache service 534 with the updated data and cause a message to be sent to the resource access application 522 (via the client interface service 514) notifying the user 524 that the action was successfully completed.

In some embodiments, in addition to or in lieu of the functionality described above, the resource management services 502 may provide users the ability to search for relevant information across all files and applications. A simple keyword search may, for example, be used to find application resources, SaaS applications, desktops, files, etc. This functionality may enhance user productivity and efficiency as application and data sprawl is prevalent across all organizations.

In other embodiments, in addition to or in lieu of the functionality described above, the resource management services 502 may enable virtual assistance functionality that allows users to remain productive and take quick actions. Users may, for example, interact with the "Virtual Assistant" and ask questions such as "What is Bob Smith's phone number?" or "What absences are pending my approval?" The resource management services 502 may, for example, parse these requests and respond because they are integrated with multiple systems on the back-end. In some embodiments, users may be able to interact with the virtual assistant through either the resource access application 522 or directly from another resource, such as Microsoft Teams. This feature may allow employees to work efficiently, stay organized, and deliver only the specific information they're looking for.

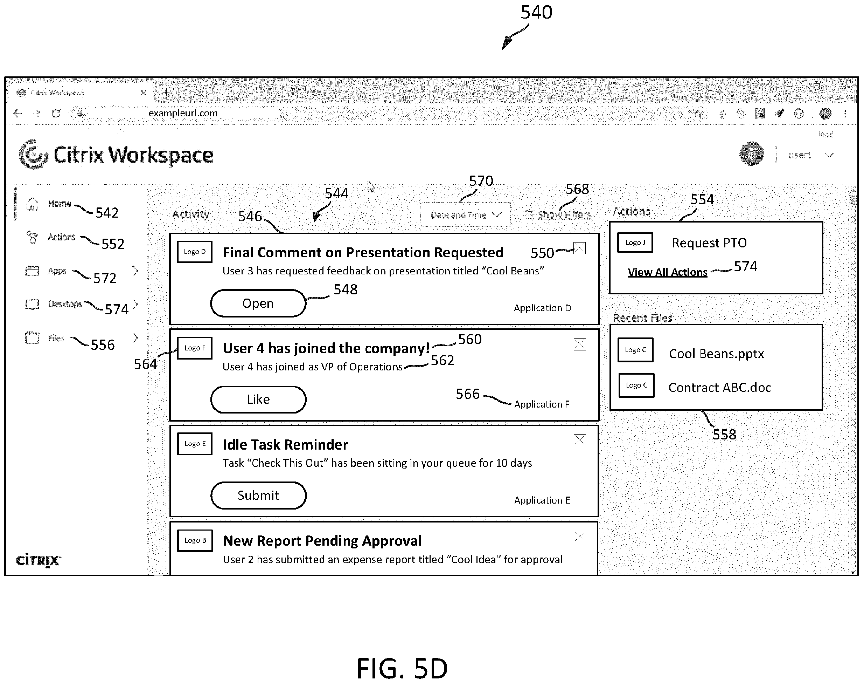

FIG. 5D shows how a display screen 540 presented by a resource access application 522 (shown in FIG. 5C) may appear when an intelligent activity feed feature is employed and a user is logged on to the system. Such a screen may be provided, for example, when the user clicks on or otherwise selects a "home" user interface element 542. As shown, an activity feed 544 may be presented on the screen 540 that includes a plurality of notifications 546 about respective events that occurred within various applications to which the user has access rights. An example implementation of a system capable of providing an activity feed 544 like that shown is described above in connection with FIG. 5C. As explained above, a user's authentication credentials may be used to gain access to various systems of record (e.g., SalesForce, Ariba, Concur, RightSignature, etc.) with which the user has accounts, and events that occur within such systems of record may be evaluated to generate notifications 546 to the user concerning actions that the user can take relating to such events. As shown in FIG. 5D, in some implementations, the notifications 546 may include a title 560 and a body 562, and may also include a logo 564 and/or a name 566 of the system of record to which the notification 546 corresponds, thus helping the user understand the proper context with which to decide how best to respond to the notification 546. In some implementations, one or more filters may be used to control the types, date ranges, etc., of the notifications 546 that are presented in the activity feed 544. The filters that can be used for this purpose may be revealed, for example, by clicking on or otherwise selecting the "show filters" user interface element 568. Further, in some embodiments, a user interface element 570 may additionally or alternatively be employed to select a manner in which the notifications 546 are sorted within the activity feed. In some implementations, for example, the notifications 546 may be sorted in accordance with the "date and time" they were created (as shown for the element 570 in FIG. 5D), a "relevancy" mode (not illustrated) may be selected (e.g., using the element 570) in which the notifications may be sorted based on relevancy scores assigned to them by the analytics service 536, and/or an "application" mode (not illustrated) may be selected (e.g., using the element 570) in which the notifications 546 may be sorted by application type.

When presented with such an activity feed 544, the user may respond to the notifications 546 by clicking on or otherwise selecting a corresponding action element 548 (e.g., "Approve," "Reject," "Open," "Like," "Submit," etc.), or else by dismissing the notification, e.g., by clicking on or otherwise selecting a "close" element 550. As explained in connection with FIG. 5C below, the notifications 546 and corresponding action elements 548 may be implemented, for example, using "microapps" that can read and/or write data to systems of record using application programming interface (API) functions or the like, rather than by performing full launches of the applications for such systems of record. In some implementations, a user may additionally or alternatively view additional details concerning the event that triggered the notification and/or may access additional functionality enabled by the microapp corresponding to the notification 546 (e.g., in a separate, pop-up window corresponding to the microapp) by clicking on or otherwise selecting a portion of the notification 546 other than one of the user interface elements 548, 550. In some embodiments, the user may additionally or alternatively be able to select a user interface element either within the notification 546 or within a separate window corresponding to the microapp that allows the user to launch the native application to which the notification relates and respond to the event that prompted the notification via that native application rather than via the microapp.

In addition to the event-driven actions accessible via the action elements 548 in the notifications 546, a user may alternatively initiate microapp actions by selecting a desired action, e.g., via a drop-down menu accessible using the "action" user interface element 552 or by selecting a desired action from a list 554 of available microapp actions. In some implementations, the various microapp actions available to the user 524 logged onto the multi-resource access system 500 may be enumerated to the resource access application 522, e.g., when the user 524 initially accesses the system 500, and the list 554 may include a subset of those available microapp actions. The available microapp actions may, for example, be organized alphabetically based on the names assigned to the actions, and the list 554 may simply include the first several (e.g., the first four) microapp actions in the alphabetical order. In other implementations, the list 554 may alternatively include a subset of the available microapp actions that were most recently or most commonly accessed by the user 524, or that are preassigned by a system administrator or based on some other criteria. The user 524 may also access a complete set of available microapp actions, in a similar manner as the "action" user interface element 552, by clicking on the "view all actions" user interface element 574.

As shown, additional resources may also be accessed through the screen 540 by clicking on or otherwise selecting one or more other user interface elements that may be presented on the screen. For example, in some embodiments, the user may also access files (e.g., via a Citrix ShareFile^{®} platform) by selecting a desired file, e.g., via a drop-down menu accessible using the "files" user interface element 556 or by selecting a desired file from a list 558 of recently and/or commonly used files. Further, in some embodiments, one or more applications may additionally or alternatively be accessible (e.g., via a Citrix Virtual Apps and Desktops^{™} service) by clicking on or otherwise selecting an "apps" user interface element 572 to reveal a list of accessible applications or by selecting a desired application from a list (not shown in FIG. 5D but similar to the list 558) of recently and/or commonly used applications. And still further, in some implementations, one or more desktops may additionally or alternatively be accessed (e.g., via a Citrix Virtual Apps and Desktops^{™} service) by clicking on or otherwise selecting a "desktops" user interface element 574 to reveal a list of accessible desktops or by or by selecting a desired desktop from a list (not shown in FIG. 5D but similar to the list 558) of recently and/or commonly used desktops.

The activity feed shown in FIG. 5D provides significant benefits, as it allows a user to respond to application-specific events generated by disparate systems of record without needing to navigate to, launch, and interface with multiple different native applications.

### F. Detailed Description of Example Embodiments of the System for Evaluating the Quality of Search API Integrations Introduced in Section A

FIG. 6 is a block diagram illustrating example components of the system 100 that was introduced in Section A. As Section A describes, in some implementations, the system 100 may include a search integration testing service 140 that is configured to perform evaluations of a search integration component (e.g., a search API integration 120) for a specific SOR 526. As shown in FIG. 6, the search integration testing service 140 may interface with an API integration provider service 130. In an example scenario, an operator or owner associated with the SOR 526 may request services to develop a search API integration 120 to provide search functionality of the SOR 526 to the intelligent workspace platform (described in Section E), e.g., via global search input box 112 (shown in FIG. 1B).

For API integration development purposes, the system 100 may include an integration developer client 608. As shown in FIG. 6, the integration developer client 608 may interface with the API integration provider service 130 to perform various functions. For purposes of developing and/or provisioning a search API integration 120 within the API integration provider service 130, the integration developer client 608 may interact with an integration development engine 610. The integration development engine 610 may, for example, provide tools and libraries for developing search integration components, such as search API integrations 120, as well as functions to test and incorporate such search integration components into the API integration provider service 130. As indicated by an arrow 626, the integration development client 608 (e.g., per instructions input by an integration developer) may interact with the integration development engine 610 to create a new search API integration 120, and, as indicated by an arrow 628, the integration development engine 610 may generate a search integration configuration to provision a search API integration 120 within the API integration provider service 130. In some implementations, the search API integration 120 may initially be provisioned within an isolated testing environment (e.g., a "sandbox") within the API integration provider service 130 where it may be tested and refined. In such implementations, after it has been adequately tested and/or approved, the search API integration 120 may subsequently be provisioned in a runtime environment of the API integration provider service 130. In some implementations, the transition of a search API integration 120 from the isolated testing environment to the runtime environment may be automated, e.g., in response to an integration accuracy score determined by the search integration testing service 140 - as explained below - exceeding a threshold.

In some embodiments, upon provisioning a search API integration 120 into in the API integration provider service 130, e.g., within an isolated testing environment, the integration developer client 608 may initiate an integration test request. As indicated by an arrow 630 in FIG. 6, such a request may be received by the integration development engine 610 of the API integration provider service 130. As indicated by an arrow 632, the integration development engine 610 may relay the integration test request to an integration testing control engine 614 of the search integration testing service 140. In some embodiments, as explained in detail below, the integration testing control engine 614 may initiate and control the testing of the search API integration 120 for the corresponding SOR 526.

In some embodiments, upon receiving the integration test request (per the arrow 632), the integration testing control engine 614 may (as indicated by an arrow 634) direct a corpus loading engine 616 to send a test corpus 602 to the SOR 526, as indicated by an arrow 636. In some implementations, for example, integration developer client 608 may, e.g., as a part of the integration creation process (per the arrow 626), provide a script or other logic to the integration development engine 610, and the integration development engine 610 may send that corpus loading logic (per an arrow 638) to the corpus loading engine 616 for use in loading the test corpus 602 onto the SOR 526. As previously noted, a true evaluation of search API integrations 120 may be achieved through consistency, standardization, and reproducible tests. Thus, the search integration testing service 140 may provide the test corpus 602, comprising a specific set of files, to the SOR 526 such that a known set of files may be used for the evaluation. The files of the test corpus 602 may comprise multiple file types and content types. The files provided as part of the test corpus 602 may correspond to a judgment list 604. For purposes of this disclosure, a single test corpus 602 and corresponding judgment list 604 will be described. It should be appreciated, however, that the test corpus 602 may actually comprise multiple test corpuses with corresponding judgment lists.

In some embodiments, the integration testing control engine 614 may keep records of evaluations for respective search API integrations 120 and/or SORs 526. Such records may include identification of the one or more test corpuses 602 which have been provided to an SOR 526. In some embodiments, the integration testing control engine 614 may determine that the SOR 526 corresponding to an integration test request has previously received a test corpus 602 and, based on such a determination, may instruct the corpus loading engine 616 not to send the test corpus 602 to the SOR 526. As noted previously, in some embodiments, the corpus loading engine 616 may receive corpus loading logic (per the arrow 638) corresponding to the SOR 526 from the integration development engine 610.

Although not illustrated in FIG. 6, in some embodiments, the corpus loading engine 616 may receive confirmation from the SOR 526 that the test corpus 602 has been successfully loaded to the SOR 526. The corpus loading engine 616 may relay such a confirmation to the integration testing control engine 614. In some embodiments, upon receiving confirmation of a successful load of the test corpus 602 at the SOR 526, the integration testing control engine 614 may initiate an evaluation corresponding to the test corpus 602. In some embodiments, as indicated by an arrow 640, the integration testing control engine 614 may direct a tuple selection engine 618 to begin a search integration evaluation. In some embodiments, the tuple selection engine 618 may receive a test corpus identifier corresponding to the test corpus 602 that was loaded at the SOR 526. As indicated by an arrow 642, the tuple selection engine 618 may request and receive a judgment list 604 corresponding to the test corpus identifier.

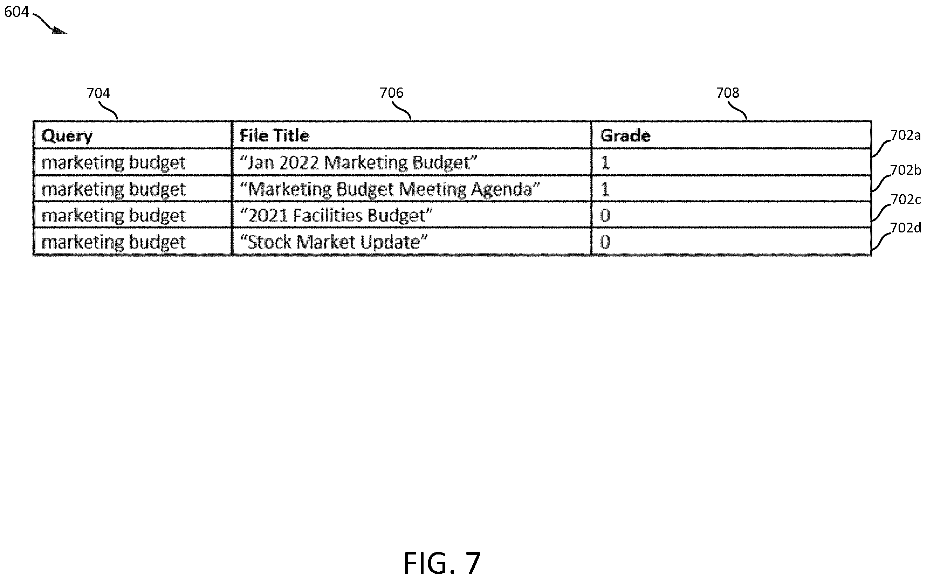

An example judgment list 604 that may be received by the tuple selection engine 618 (per the arrow 642) is shown in FIG. 7. As described in more detail below with reference to FIG. 7, the judgment list 604 may include one or more query values 704. As indicated by an arrow 644, the tuple selection engine 618 may send the query value(s) 704 of the judgment list 604, as test queries, to the query generation engine 620. As previously described in relation to FIG. 1A and 1B, the system 100 may enable the performance of a federated search, such as using the global search input box 112, of multiple SORs 526. In some embodiments, the query generation engine 620 may use the provided query values (per the arrow 644) to generate queries 104 in a standard abstract query language for evaluating the search integration component. As indicated by an arrow 646, the query generation engine 620 may send the queries to an API EP 115 of the search API integration 120 that is to be tested.

The search API integration 120 may execute one or more scripts to generate SOR-specific API calls 106 (as indicated by an arrow 648) for search queries to a respective SOR 526. In some implementations, search API integration 120 generating the outgoing API calls 106 may be configured to translate the search queries 104 to a SOR-specific query language, and to send such translated queries to the API EP 125 of the SOR 256. The SOR 526 may perform the test search query, as translated by the search API integration 120, with the intent for the test search query to identify the appropriate files from the test corpus 602 loaded to the SOR 526. In some embodiments, the SOR 526 may determine search results for test search queries received from the search API integration 120 (per the arrow 648), and transmit one or more API responses 108 representing such search results to the search API integration 120 (per an arrow 650).

In some embodiments, the search API integration 120 may translate the search results received from the SOR 526 into a standardized format, e.g., for presentation via the resource access application 522 (shown in FIGS. 5B and 5C), such via the application view 110 illustrated in FIG. 1B. In some embodiments, upon the search API integration 120 translating the search results, as indicated by an arrow 652, the search API integration 120 may send the results to the result evaluation engine 622. As indicated by an arrow 654, the result evaluation engine 622 may also receive the expected results (which may be included in the judgment list 604, as described below) from the tuple selection engine 618. In some embodiments, the result evaluation engine 622 may use the expected results indicated in the judgment list 604 (such as shown in FIG. 7) to evaluate the results 107 returned from the SOR 526, via the search API integration 120 that is being tested. As indicated by an arrow 656, in some embodiments, the result evaluation engine 622 may determine evaluation results and send the evaluation results to a score determination engine 624. The score determination engine 624 may determine an integration accuracy score based on such evaluation results.

In some embodiments, as indicated by an arrow 658, the score determination engine 624 may send the integration accuracy score to the integration development engine 610, such as via an API EP 660 of the integration development engine 610. Further, in some embodiments, as indicated by an arrow 662, the integration development engine 610 may relay the integration accuracy score to the integration developer client 608. Based on the results, an integration developer may operate the integration developer client 608 to further interact with the integration development engine 610 (e.g., per the arrow 626) to may make changes to the search API integration 120, in an effort to improve the accuracy score. The integration developer client 608 may initiate another integration test request (per the arrow 630) and the testing processes described above may be repeated. Further, as also noted above, in some implementations, the system 100 may be configured to determine whether the integration accuracy score satisfies a threshold, and may cause one or more actions to be taken automatically if such a threshold is met. For instance, in some implementations, upon the integration development engine 610 receiving an integration accuracy score (per the arrow 658) that exceeds a threshold, the integration development engine 610 may automatically approve the search API integration 120 for use in a runtime environment, or perhaps even automatically transition the search API integration 120 from an isolated testing environment to a runtime environment.

FIG. 7 illustrates an example judgment list 604, in accordance with some embodiments. As shown, in some embodiments, a judgment list 604 may comprise tuples of values for evaluating the accuracy of a set of results. A respective tuple (e.g., a given one of tuples 702a, 702b, 702c, 702d) of a judgment list 604 may define a file's relevance for a query. The relevance may be scored using a grade value 708. In some embodiments, the grade value 708 may be a Boolean value that indicates whether or not the file is relevant. In other embodiments, the grade may be a numerical value that indicates a level of relevancy, such as a ranking in a list of the files. The tuples 702a, 702b, 702c, 702d of the example judgment list 604 illustrated in FIG. 7 comprise a query value 704, a file value 706, and the grade value 708. The example judgment list 604 indicates that, for any given tuple 702, when a search query is performed using the query value 704, if the search result includes a file identified by the file value 706, then the search result is correct or incorrect based on the grade value 708.

For example, using the values illustrated in the example judgment list 604 a search query may be requested using the query value 704 of "marketing budget." The search results from such a search query may include at least one file title. As illustrated by tuple 702b, if the search results include the file title "Marketing Budget Meeting Agenda," then based on the tuple 702b indicating a grade value 708 of "1" the search correctly identified a file from the test corpus 602. Further, as illustrated by tuple 702d, if the search results include the file title "Stock Market Update," then based on the tuple 702d indicating a grade value 708 of "0" the search incorrectly identified a file from the test corpus 602.

In some embodiments, the test corpus 602 may include files with titles or content that corresponds to the file value 706. For example, the test corpus 602 may include a file corresponding to the respective tuples 702a, 702b, 702c, 702d. Whether or not a file from the test corpus 602 should be identified in the search results may depend upon the grade value 708.

A judgment list 604 may be used to test the quality of a single search API integration 120 for a SOR 526, as described in reference to FIG. 6. The judgment list 604 and corresponding test corpus 602, as described herein, may be used to build a complete validation process to test search API integrations 120 for respective SORs 526, and may thus maintain a consistent federated search performance standard across multiple search API integrations 120. In some embodiments, the evaluation using the judgment list 604 and test corpus 602 may produce (such as by the score determination engine 624) a global compliance and relevancy score, such as by using a metric (i.e., Discounted Cumulative Gain).

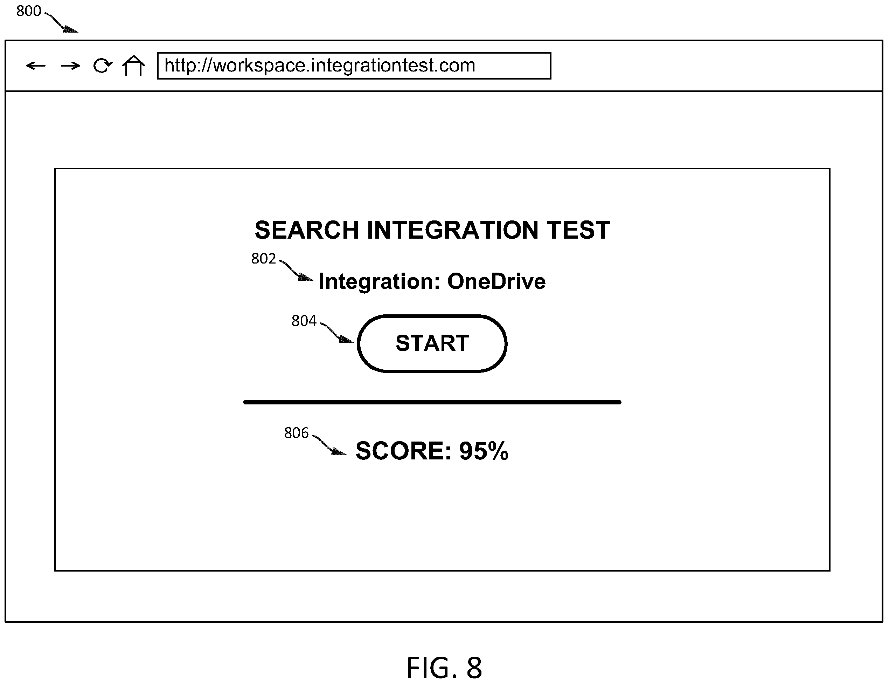

FIG. 8 illustrates an example test interface 800 for initiating an evaluation of a search API integration 120, in accordance with some embodiments. In some implementations, for example, the test interface 800 may be presented by a display screen of the integration developer client 608 shown in FIG. 6. While the test interface 800 is illustrated as a web page, the test interface 800 may take on any of numerous other forms, and may, for example, be a part of a software application, client interface, or an intelligent workspace platform. As shown in FIG. 8, in some embodiments, the test interface 800 may include an integration identification element 802 to identify the SOR 526 with which the search API integration 120 that is to be tested is configured to interface. The test interface 800 may include a start button 804 to initiate the evaluation of the search API integration 120. The test interface 800 may include a result score 806 for the evaluation of the search API integration 120, such as a score determined by the score determination engine 624.

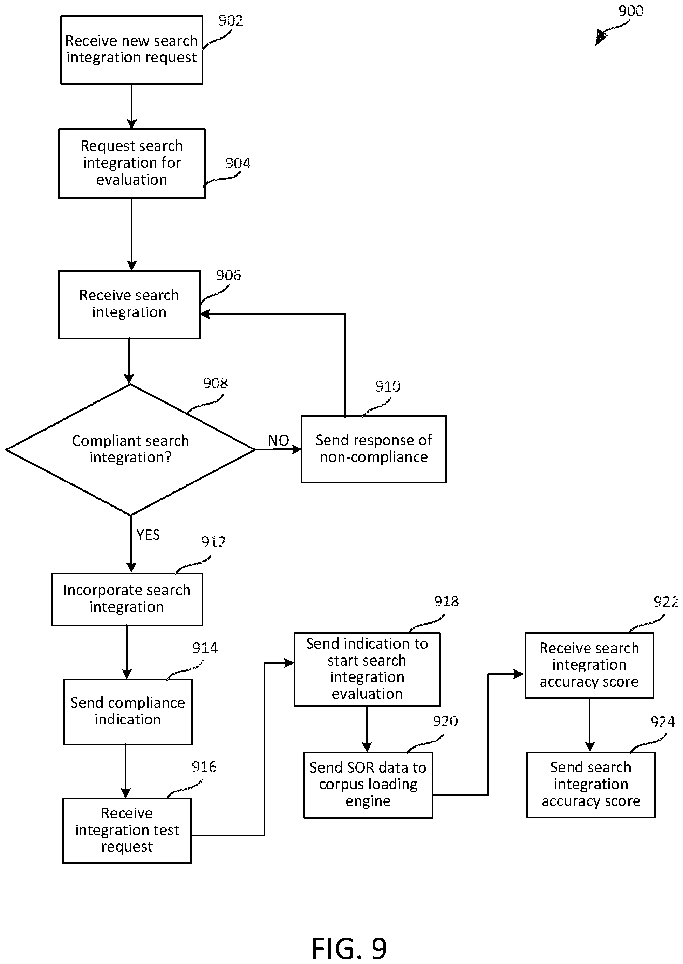

FIG. 9 illustrates an example routine 900 that may be performed by the integration development engine 610 for provisioning a search API integration 120 within the API integration provider service (e.g., within an isolated testing environment) and executing an evaluation of the provisioned search API integration 120, in accordance with some embodiments. In some implementations, a user may operate a client device 202 as the integration developer client 608. In some implementations, the integration developer client 608 may include a GUI providing navigation tools to develop a search API integration 120 for the API integration provider service 130.

As shown in FIG. 9, in some implementations, the routine 900 may begin at a step 902, at which the integration development engine 610 may receive a request to incorporate a new search API integration 120 into the API integration provider service 130.

In some implementations, based on receiving such a request, at a step 904 of the routine 900, the integration development engine 610 may provide an indication to the integration developer client 608 that the search API integration 120 needs to be evaluated and may request the search API integration 120 from the integration developer client 608. In some implementations, at the step 904 the integration development engine 610 may request connection data with respect to the SOR 526 associated with the search API integration 120. For example, the integration development engine 610 may request logic that the corpus loading engine 616 can use to load the test corpus 602 onto the SOR 526.

In response to the request sent to the integration developer client 608, the integration development engine 610 may receive, at a step 906 of the routine 900, the search API integration 120, as well as other identifying information, such as identification of the SOR 526 associated with the search API integration 120. In some embodiments, the integration development engine 610 may receive additional connection data for the SOR 526, as described above, such as for loading the test corpus 602.

In some implementations, in response to receiving the search API integration 120, at a decision 908 of the routine 900, the integration development engine 610 may determine if the search API integration 120 is in compliance with the system 100. For example, the integration development engine 610 may determine if the search API integration 120 is functionally executable as part of the API integration provider service 130. In some implementations, the integration development engine 610 may determine if the search API integration 120 meets certain security requirements for the API integration provider service 130.

If the integration development engine 610 determines, at the decision 908, that the search API integration 120 is not compliant, then at a step 910 of the routine 900, the integration development engine 610 may send a response to the integration developer client 608 indicating the non-compliance of the search API integration 120. The routine 900 may then return to the step 906 and wait for another response from the integration developer client 608.

If, at the decision 908, the integration development engine 610 determines the search API integration 120 is compliant, then, at a step 912 of the routine 900, the integration development engine 610 may incorporate the search API integration 120 into the API integration provider service 130. As noted above, the search API integration 120 may include an API EP 115 that the API integration provider service 130 may make available for receiving search API calls 104 for the SOR 526.

At a step 914 of the routine 900, the integration development engine 610 may send an indication of compliance for the search API integration 120 to the integration developer client 608.

In some implementations, at a step 916 of the routine 900, the integration development engine 610 may receive an integration test request (e.g. per the arrow 630 shown in FIG. 6) from the integration developer client 608. This may be an indication to begin the evaluation process, as described in reference to FIG. 6.

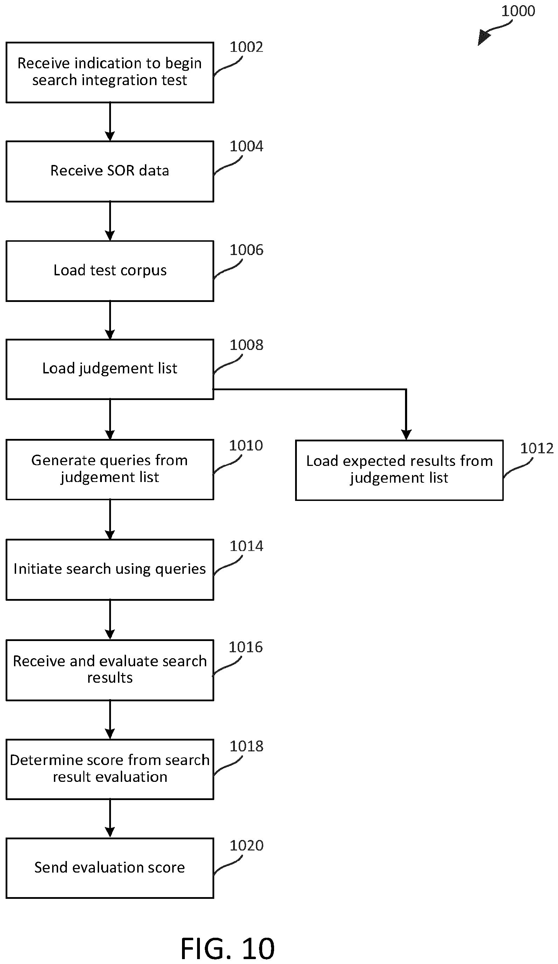

In some implementations, in response to receiving the integration test request, at a step 918 of the routine 900, the integration development engine 610 may send an indication to the integration testing control engine 614 (e.g., per the arrow 658 in FIG. 6) of the search integration testing service 140 to begin the search integration evaluation process. The integration testing control engine 614 may receive the request at a step 1002 (described below in connection with FIG. 10). In some implementations, the integration development engine 610 may provide data to the integration testing control engine 614 that identifies the API EP 115 for the search API integration 120 that is to be evaluated.

In some implementations, at a step 920 of the routine 900, the integration development engine 610 may send data related to the SOR 526 to the corpus loading engine 616, such as logic and/or connection data for transmitting the test corpus 602 to the SOR 526.

As described in reference to FIG. 10, the integration testing control engine 614 may execute a routine 1000 to evaluate the search API integration 120. In some implementations, upon completion of the evaluation, at a step 922 of the routine 900, the integration development engine 610 may receive a score from the score determination engine 624 of the search integration testing service 140, as described below in relation to a step 1020 of the routine 1000. The integration development engine 610 may send the evaluation score to the integration developer client 608. In some implementations, the search integration evaluation score may be presented as part of a user interface, such as the result score 806 of the test interface 800 (shown in FIG. 8).

FIG. 10 illustrates an example routine 1000 that may be performed by the search integration testing service 140 for performing an evaluation of a search API integration 120, in accordance with some embodiments.

In some implementations, at a step 1002 of the routine 1000, the integration testing control engine 614 may receive an indication (e.g., per the arrow 632 in FIG. 6) to begin a search integration evaluation from the integration development engine 610. The integration testing control engine 614 may receive data indicating the API EP 115 for the search API integration 120 to evaluate.

In some implementations, at a step 1004 of the routine 10004, the corpus loading engine 616 may receive data (e.g., per the arrow 638 in FIG. 6) identifying the SOR 526 for the search implementation and connection data for loading files, such as the test corpus 602. The connection data may include an identification one or more API endpoints of the SOR 526 for uploading files and/or access credentials for performing a file transfer.

At a step 1006 of the routine 1000, the integration testing control engine 614 may instruct the corpus loading engine 616 (e.g., per the arrow 634 in FIG. 6) to load the test corpus 602 onto to the SOR 526 using the logic and/or connection data for the SOR 526 noted above (e.g., access credentials, API EP identifier).

Similarly, at a step 1008 of the routine 1000, the integration testing control engine 614 may send an indication (e.g., per the arrow 640 in FIG. 6) to the tuple selection engine 618 to load the judgment list 604 corresponding to the test corpus 602. After receiving the judgment list 604, the tuple selection engine 618 may identify tuples from the judgment list 604 for generating search queries. For example, as shown in FIG. 7, the judgment list 604 includes four tuples 702a, 702b, 702c, 702d. The tuples 702a, 702b, 702c, 702d have the same query value 704 of "marketing budget." However, a judgment list 604 may include a plurality of different query values 704. The tuple selection engine 618 may select some of the tuples or all of the tuples from the judgment list 604. In some implementations, the tuple selection engine 618 may send the query values 704 to the query generation engine 620 (e.g., per the arrow 644 shown in FIG. 6).

At a step 1010 of the routine 1000, the query generation engine 620 may receive the selected query values 704 from the tuple selection engine 618 and generate search queries from the selected query values 704 to evaluate the search API integration 120. As noted above, in some implementations, such search queries may be in a standard abstract query language (i.e., not specific to any one SOR 526), similar to queries that are made based on an entries provided via the global search input box 112 illustrated in FIG. 1B. In some implementations, the tuple selection engine 618 may send the selected tuples to the result evaluation engine 622.

At a step 1012 of the routine 1000, the result evaluation engine 622 may load the file values 706 and grade values 708 of the selected tuples from the judgment list 604.

In some implementations, at a step 1014 of the routine 1000, the query generation engine 620 may initiate the search(es) using the generated search queries based on the selected query values 704. In some implementations, to initiate the search(es), the query generation engine 620 may send the generated search queries to the API EP 115 identified in the integration test request and corresponding to the search API integration 120 that is to be tested. The search API integration 120 of the API integration provider service 130 may translate the generated search queries for the SOR 526 and send the translated search queries to one or more API EPs 125 of the SOR 526.

In some implementations, at a step 1016 of the routine 1000, the result evaluation engine 622 may receive the search results for the generated search queries. As describe above, the search API integration 120 may receive the search results from the SOR 526. The search API integration 120 may translate the search results and then send the translated search results to the result evaluation engine 622. The result evaluation engine 622 may evaluate the translated search results using the grade values 708 of the judgment list 604. The result evaluation engine 622 may send the search result to the score determination engine 624.

In some implementations, at a step 1018 of the routine 1000, the score determination engine 624 may determine a score for the search(es) performed based on the generated search queries. The score determination engine 624 may, for example, determine a global compliance and relevancy score (e.g., integration accuracy score), such as by using a metric (i.e., Discounted Cumulative Gain).

In some implementations, at a step 1020 of the routine 1000, the score determination engine 624 may send the integration accuracy score to the integration development engine 610. As described in reference to the step 922 of the routine 900 (shown in FIG. 9), the integration development engine 610 may receive the integration accuracy score. The integration development engine 610 may then send the search integration accuracy score to the integration developer client 608, as described in connection with the step 924.

### G. Example Implementations of Methods, Systems, and Computer-Readable Media in Accordance with the Present Disclosure

The following paragraphs (M1) through (M8) describe examples of methods that may be implemented in accordance with the present disclosure.
(M1) A method may be performed that involves receiving, by a computing system, a request to test accuracy of a first search integration component for a first system of record, the first search integration component being configured to receive, at a first application programming interface (API) endpoint and from one or more devices, first incoming API calls representing search queries, to translate the first incoming API calls into first outgoing API calls to be sent to the first system of record, to send the first outgoing API calls to one or more second API endpoints of the first system of record, to receive, from the first system of record, first incoming API responses to the first outgoing API calls, to translate the first incoming API responses into first outgoing API responses representing search query results, and to send the first outgoing API responses to the one or more devices; determining, by the computing system, that a test corpus of files has been stored by the first system of record; in response to the request, sending, from the computing system to the first API endpoint, at least a first API call corresponding to at least a first search query identified in a judgment list, the judgment list further including first data indicating a relevancy of at least one file of the test corpus of files to the first search query; receiving, by the computing system and from the first search integration component, a first API response to the first API call, the first API response identifying one or more files stored by the first system of record; and determining, by the computing system, a first accuracy score for the first search integration component based at least in part the first data and the one or more files identified in the first API response.
(M2) A method may be performed as described in paragraph (M1), and may further involve receiving, by the computing system, a second request to test accuracy of a second search integration component for a second system of record, the second search integration component being configured to receive, at a third API endpoint and from the one or more devices, second incoming API calls representing search queries, to translate the second incoming API calls into second outgoing API calls to be sent to the second system of record, to send the second outgoing API calls to one or more fourth API endpoints of the second system of record, to receive, from the second system of record, second incoming API responses to the second outgoing API calls, to translate the second incoming API responses into second outgoing API responses representing search query results, and to send the second outgoing API responses to the one or more devices; determining, by the computing system, that the test corpus of files has been stored by the second system of record; in response to the request, sending, from the computing system to the third API endpoint, at least a second API call corresponding to at least the first search query identified in the judgment list; receiving, by the computing system and from the second search integration component, a second API response to the second API call, the second API response identifying one or more files stored by the second system of record; and determining, by the computing system, a second accuracy score for the second search integration component based at least in part the first data and the one or more files identified in the second API response.
(M3) A method may be performed as described in paragraph (M2), wherein the first API endpoint and the third API endpoint may have a same input schema, the first search integration component may have a first output schema, and the second search integration component may have a second output schema, the first output schema being different than the second output schema.
(M4) A method may be performed as described in any of paragraphs (M1) through (M3), and may further involve sending, from the computing system to the first API endpoint, at least a second API call corresponding to at least a second search query identified in the judgment list, the judgment list further including second data indicating a relevancy of at least one file of the test corpus of files to the second search query; receiving, by the computing system and from the first search integration component, a second API response to the second API call, the second API response identifying one or more files stored by the first system of record; and determining, by the computing system, a second accuracy score for the first search integration component based at least in part the second data and the one or more files identified in the second API response.
(M5) A method may be performed as described in paragraph (M4), and may further involve aggregating, as a global score, the first accuracy score and the second accuracy score; and sending the global score to a computing device associated with the first system of record.
(M6) A method may be performed as described in any of paragraphs (M1) through (M5), wherein the first search query identified in the judgment list may be configured to perform a phrase search.
(M7) A method may be performed as described in any of paragraphs (M1) through (M6), wherein the first search query identified in the judgment list may be configured to perform a synonym search.
(M8) A method may be performed as described in any of paragraphs (M1) through (M7), and may further involve determining the first accuracy score satisfies an accuracy threshold; and storing the first search integration component as part of a set of approved search integration components at the computing system based at least in part on the first accuracy score satisfying the accuracy threshold.

The following paragraphs (S1) through (S8) describe examples of systems and devices that may be implemented in accordance with the present disclosure.
(S 1) A system may comprise at least one processor and at least one computer-readable medium encoded with instructions which, when executed by the at least one processor, cause the system to receive a request to test accuracy of a first search integration component for a first system of record, the first search integration component being configured to receive, at a first application programming interface (API) endpoint and from one or more devices, first incoming API calls representing search queries, to translate the first incoming API calls into first outgoing API calls to be sent to the first system of record, to send the first outgoing API calls to one or more second API endpoints of the first system of record, to receive, from the first system of record, first incoming API responses to the outgoing API calls, to translate the first incoming API responses into first outgoing API responses representing search query results, and to send the first outgoing API responses to the one or more devices, to determine that a test corpus of files has been stored by the first system of record, in response to the request, to send, to the first API endpoint, at least a first API call corresponding to at least a first search query identified in a judgment list, the judgment list further including first data indicating a relevancy of at least one file of the test corpus of files to the first search query, to receive, from the first search integration component, a first API response to the first API call, the first API response identifying one or more files stored by the first system of record, and to determine a first accuracy score for the first search integration component based at least in part the first data and the one or more files identified in the first API response.
(S2) A system may be configured as described in paragraph (S1), and the at least one computer-readable medium may be further encoded with additional instructions which, when executed by the at least one processor, further cause the system to receive a second request to test accuracy of a second search integration component for a second system of record, the second search integration component being configured to receive, at a third API endpoint and from the one or more devices, second incoming API calls representing search queries, to translate the second incoming API calls into second outgoing API calls to be sent to the second system of record, to send the second outgoing API calls to one or more fourth API endpoints of the second system of record, to receive, from the second system of record, second incoming API responses to the second outgoing API calls, to translate the second incoming API responses into second outgoing API responses representing search query results, and to send the second outgoing API responses to the one or more devices, to determine that the test corpus of files has been stored by the second system of record, in response to the request, to send, to the third API endpoint, at least a second API call corresponding to at least the first search query identified in the judgment list, to receive, from the second search integration component, a second API response to the second API call, the second API response identifying one or more files stored by the second system of record, and to determine a second accuracy score for the second search integration component based at least in part the first data and the one or more files identified in the second API response.
(S3) A system may be configured as described in paragraph (S2), wherein the first API endpoint and the third API endpoint have a same input schema, the first search integration component may have a first output schema, and the second search integration component may have a second output schema, the first output schema being different than the second output schema.
(S4) A system may be configured as described in any of paragraphs (S1) through (S3), and the at least one computer-readable medium may be further encoded with additional instructions which, when executed by the at least one processor, further cause the system to send, to the first API endpoint, at least a second API call corresponding to at least a second search query identified in the judgment list, the judgment list further including second data indicating a relevancy of at least one file of the test corpus of files to the second search query, to receive, from the first search integration component, a second API response to the second API call, the second API response identifying one or more files stored by the first system of record, and to determine a second accuracy score for the first search integration component based at least in part the second data and the one or more files identified in the second API response.
(S5) A system may be configured as described in paragraph (S4), and the at least one computer-readable medium may be further encoded with additional instructions which, when executed by the at least one processor, further cause the system to aggregate, as a global score, the first accuracy score and the second accuracy score; and send the global score to a computing device associated with the first system of record.
(S6) A system may be configured as described in any of paragraphs (S1) through (S5), wherein the first search query identified in the judgment list may be configured to perform a phrase search.
(S7) A system may be configured as described in any of paragraphs (S1) through (S6), wherein the first search query identified in the judgment list may be configured to perform a synonym search.
(S8) A system may be configured as described in any of paragraphs (S1) through (S7), and the at least one computer-readable medium may be further encoded with additional instructions which, when executed by the at least one processor, further cause the system to determine the first accuracy score satisfies an accuracy threshold, and to store the first search integration component as part of a set of approved search integration components at the computing system based at least in part on the first accuracy score satisfying the accuracy threshold.

The following paragraphs (CRM1) through (CRM8) describe examples of computer-readable media that may be implemented in accordance with the present disclosure.
(CRM1) At least one non-transitory computer-readable medium may be encoded with instructions which, when executed by at least one processor of a system, cause the system to receive a request to test accuracy of a first search integration component for a first system of record, the first search integration component being configured to receive, at a first application programming interface (API) endpoint and from one or more devices, first incoming API calls representing search queries, to translate the first incoming API calls into outgoing API calls to be sent to the first system of record, to send the first outgoing API calls to one or more second API endpoints of the first system of record, to receive, from the first system of record, first incoming API responses to the first outgoing API calls, to translate the first incoming API responses into first outgoing API responses representing search query results, and to send the first outgoing API responses to the one or more devices, to determine that a test corpus of files has been stored by the first system of record, in response to the request, to send, to the first API endpoint, at least a first API call corresponding to at least a first search query identified in a judgment list, the judgment list further including first data indicating a relevancy of at least one file of the test corpus of files to the first search query, to receive, from the first search integration component, a first API response to the first API call, the first API response identifying one or more files stored by the first system of record, and to determine a first accuracy score for the first search integration component based at least in part the first data and the one or more files identified in the first API response.
(CRM2) At least one non-transitory computer-readable medium may be configured as described in paragraph (CRM1), and may be further encoded with additional instructions which, when executed by the at least one processor, further cause the system receive a second request to test accuracy of a second search integration component for a second system of record, the second search integration component being configured to receive, at a third API endpoint and from the one or more devices, second incoming API calls representing search queries, to translate the second incoming API calls into second outgoing API calls to be sent to the second system of record, to send the second outgoing API calls to one or more fourth API endpoints of the second system of record, to receive, from the second system of record, second incoming API responses to the second outgoing API calls, to translate the second incoming API responses into second outgoing API responses representing search query results, and to send the second outgoing API responses to the one or more devices, to determine that the test corpus of files has been stored by the second system of record, in response to the request, to send, to the third API endpoint, at least a second API call corresponding to at least the first search query identified in the judgment list, to receive, from the second search integration component, a second API response to the second API call, the second API response identifying one or more files stored by the second system of record, and to determine a second accuracy score for the second search integration component based at least in part the first data and the one or more files identified in the second API response.
(CRM3) At least one non-transitory computer-readable medium may be configured as described in any of paragraphs (CRM1) through (CRM2), wherein the first API endpoint and the third API endpoint may have a same input schema, the first search integration component may have a first output schema, and the second search integration component may have a second output schema, the first output schema being different than the second output schema.
(CRM4) At least one non-transitory computer-readable medium may be configured as described in any of paragraphs (CRM1) through (CRM3), and may be further encoded with additional instructions which, when executed by the at least one processor, further cause the system to send, to the first API endpoint, at least a second API call corresponding to at least a second search query identified in the judgment list, the judgment list further including second data indicating a relevancy of at least one file of the test corpus of files to the second search query, to receive, from the search integration component, a second API response to the second API call, the second API response identifying one or more files stored by the first system of record, and to determine a second accuracy score for the first search integration component based at least in part the second data and the one or more files identified in the second API response.
(CRM5) At least one non-transitory computer-readable medium may be configured as described in paragraph (CRM4), and may be further encoded with additional instructions which, when executed by the at least one processor, further cause the system to aggregate, as a global score, the first accuracy score and the second accuracy score; and send the global score to a computing device associated with the first system of record.
(CRM6) At least one non-transitory computer-readable medium may be configured as described in any of paragraphs (CRM1) through (CRM5), wherein the first search query identified in the judgment list may be configured to perform a phrase search.
(CRM7) At least one non-transitory computer-readable medium may be configured as described in any of paragraphs (CRM1) through (CRM6), wherein the first search query identified in the judgment list may be configured to perform a synonym search.
(CRM8) At least one non-transitory computer-readable medium may be configured as described in any of paragraphs (CRM1) through (CRM7), and may be further encoded with additional instructions which, when executed by the at least one processor, further cause the system to determine the first accuracy score satisfies an accuracy threshold, and to store the first search integration component as part of a set of approved search integration components at the computing system based at least in part on the first accuracy score satisfying the accuracy threshold.

Having thus described several aspects of at least one embodiment, it is to be appreciated that various alterations, modifications, and improvements will readily occur to those skilled in the art. Such alterations, modifications, and improvements are intended to be part of this disclosure, and are intended to be within the spirit and scope of the disclosure. Accordingly, the foregoing description and drawings are by way of example only.

Various aspects of the present disclosure may be used alone, in combination, or in a variety of arrangements not specifically discussed in the embodiments described in the foregoing and is therefore not limited in this application to the details and arrangement of components set forth in the foregoing description or illustrated in the drawings. For example, aspects described in one embodiment may be combined in any manner with aspects described in other embodiments.

Also, the disclosed aspects may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," "third," etc. in the claims to modify a claim element does not by itself connote any priority, precedence or order of one claim element over another or the temporal order in which acts of a method are performed, but are used merely as labels to distinguish one claimed element having a certain name from another element having a same name (but for use of the ordinal term) to distinguish the claim elements.

Also, the phraseology and terminology used herein is used for the purpose of description and should not be regarded as limiting. The use of "including," "comprising," or "having," "containing," "involving," and variations thereof herein, is meant to encompass the items listed thereafter and equivalents thereof as well as additional items.

## Claims

1. A method, comprising:
receiving, by a computing system, a request to test accuracy of a first search integration component for a first system of record, the first search integration component being configured to receive, at a first application programming interface (API) endpoint and from one or more devices, first incoming API calls representing search queries, to translate the first incoming API calls into first outgoing API calls to be sent to the first system of record, to send the first outgoing API calls to one or more second API endpoints of the first system of record, to receive, from the first system of record, first incoming API responses to the first outgoing API calls, to translate the first incoming API responses into first outgoing API responses representing search query results, and to send the first outgoing API responses to the one or more devices;
determining, by the computing system, that a test corpus of files has been stored by the first system of record;
in response to the request, sending, from the computing system to the first API endpoint, at least a first API call corresponding to at least a first search query identified in a judgment list, the judgment list further including first data indicating a relevancy of at least one file of the test corpus of files to the first search query;
receiving, by the computing system and from the first search integration component, a first API response to the first API call, the first API response identifying one or more files stored by the first system of record; and
determining, by the computing system, a first accuracy score for the first search integration component based at least in part the first data and the one or more files identified in the first API response.

2. The method of claim 1, further comprising:
receiving, by the computing system, a second request to test accuracy of a second search integration component for a second system of record, the second search integration component being configured to receive, at a third API endpoint and from the one or more devices, second incoming API calls representing search queries, to translate the second incoming API calls into second outgoing API calls to be sent to the second system of record, to send the second outgoing API calls to one or more fourth API endpoints of the second system of record, to receive, from the second system of record, second incoming API responses to the second outgoing API calls, to translate the second incoming API responses into second outgoing API responses representing search query results, and to send the second outgoing API responses to the one or more devices;
determining, by the computing system, that the test corpus of files has been stored by the second system of record;
in response to the request, sending, from the computing system to the third API endpoint, at least a second API call corresponding to at least the first search query identified in the judgment list;
receiving, by the computing system and from the second search integration component, a second API response to the second API call, the second API response identifying one or more files stored by the second system of record; and
determining, by the computing system, a second accuracy score for the second search integration component based at least in part the first data and the one or more files identified in the second API response.

3. The method of claim 2, wherein:
the first API endpoint and the third API endpoint have a same input schema; and
the first search integration component has a first output schema and the second search integration component has a second output schema, the first output schema being different than the second output schema.

4. The method of claim 1, further comprising:
sending, from the computing system to the first API endpoint, at least a second API call corresponding to at least a second search query identified in the judgment list, the judgment list further including second data indicating a relevancy of at least one file of the test corpus of files to the second search query;
receiving, by the computing system and from the first search integration component, a second API response to the second API call, the second API response identifying one or more files stored by the first system of record; and
determining, by the computing system, a second accuracy score for the first search integration component based at least in part the second data and the one or more files identified in the second API response.

5. The method of claim 4, further comprising:
aggregating, as a global score, the first accuracy score and the second accuracy score; and
sending the global score to a computing device associated with the first system of record.

6. The method of claim 1, wherein the first search query identified in the judgment list is configured to perform a phrase search.

7. The method of claim 1, wherein the first search query identified in the judgment list is configured to perform a synonym search.

8. The method of claim 1, further comprising:
determining the first accuracy score satisfies an accuracy threshold; and
storing the first search integration component as part of a set of approved search integration components at the computing system based at least in part on the first accuracy score satisfying the accuracy threshold.

9. A computing system, comprising:
at least one processor; and
at least one computer-readable medium encoded with instructions which, when executed by the at least one processor, cause the computing system to:
receive a request to test accuracy of a first search integration component for a first system of record, the first search integration component being configured to receive, at a first application programming interface (API) endpoint and from one or more devices, first incoming API calls representing search queries, to translate the first incoming API calls into first outgoing API calls to be sent to the first system of record, to send the first outgoing API calls to one or more second API endpoints of the first system of record, to receive, from the first system of record, first incoming API responses to the outgoing API calls, to translate the first incoming API responses into first outgoing API responses representing search query results, and to send the first outgoing API responses to the one or more devices;
determine that a test corpus of files has been stored by the first system of record;
in response to the request, send, to the first API endpoint, at least a first API call corresponding to at least a first search query identified in a judgment list, the judgment list further including first data indicating a relevancy of at least one file of the test corpus of files to the first search query;
receive, from the first search integration component, a first API response to the first API call, the first API response identifying one or more files stored by the first system of record; and
determine a first accuracy score for the first search integration component based at least in part the first data and the one or more files identified in the first API response.

10. The computing system of claim 9, wherein the at least one computer-readable medium is further encoded with additional instructions which, when executed by the at least one processor, further cause the computing system to:
receive a second request to test accuracy of a second search integration component for a second system of record, the second search integration component being configured to receive, at a third API endpoint and from the one or more devices, second incoming API calls representing search queries, to translate the second incoming API calls into second outgoing API calls to be sent to the second system of record, to send the second outgoing API calls to one or more fourth API endpoints of the second system of record, to receive, from the second system of record, second incoming API responses to the second outgoing API calls, to translate the second incoming API responses into second outgoing API responses representing search query results, and to send the second outgoing API responses to the one or more devices;
determine that the test corpus of files has been stored by the second system of record;
in response to the request, send, to the third API endpoint, at least a second API call corresponding to at least the first search query identified in the judgment list;
receive, from the second search integration component, a second API response to the second API call, the second API response identifying one or more files stored by the second system of record; and
determine a second accuracy score for the second search integration component based at least in part the first data and the one or more files identified in the second API response.

11. The computing system of claim 10, wherein:
the first API endpoint and the third API endpoint have a same input schema; and
the first search integration component has a first output schema and the second search integration component has a second output schema, the first output schema being different than the second output schema.

12. The computing system of claim 9, wherein the at least one computer-readable medium is further encoded with additional instructions which, when executed by the at least one processor, further cause the computing system to:
send, to the first API endpoint, at least a second API call corresponding to at least a second search query identified in the judgment list, the judgment list further including second data indicating a relevancy of at least one file of the test corpus of files to the second search query;
receive, from the first search integration component, a second API response to the second API call, the second API response identifying one or more files stored by the first system of record; and
determine a second accuracy score for the first search integration component based at least in part the second data and the one or more files identified in the second API response.

13. The computing system of claim 12, wherein the at least one computer-readable medium is further encoded with additional instructions which, when executed by the at least one processor, further cause the computing system to:
aggregate, as a global score, the first accuracy score and the second accuracy score; and
send the global score to a computing device associated with the first system of record.

14. The computing system of claim 9, wherein the first search query identified in the judgment list is configured to perform a phrase search or a synonym search.

15. The computing system of claim 9, wherein the at least one computer-readable medium is further encoded with additional instructions which, when executed by the at least one processor, further cause the computing system to:
determine the first accuracy score satisfies an accuracy threshold; and
store the first search integration component as part of a set of approved search integration components at the computing system based at least in part on the first accuracy score satisfying the accuracy threshold.
